# EUROPEAN PATENT APPLICATION

(11) **EP 4 501 762 A1**
(43) Date of publication of application: **05.02.2025**
(21) Application number: 24191997.6
(22) Date of filing: 31.07.2024
(51) Int. Cl.: B62J 1/08

(54) **HEIGHT ADJUSTABLE SEAT POSTS FOR BICYCLES**

(30) Priority: 31.07.2023 US 202363516574 P; 25.07.2024 US 202418784117
(71) Applicant: SRAM, LLC., Chicago, IL 60607 (US)
(72) Inventor: Dunlap, Charles, Colorado Springs, 80907 (US); Koziy, Kostyantyn, Colorado Springs, 80907 (US)
(74) Representative: Thum, Bernhard

(57) **Abstract**

Height adjustable seat posts for bicycles are described herein. An example height adjustable seat post (112) includes an upper tube (204) and a lower tube (202) configured in a telescopic arrangement. The height adjustable seat post includes a piston (512) in the upper tube that divides the upper tube into a first chamber (516) and a second chamber (518). The piston defines a fluid passageway (1611) between the first chamber and the second chamber. The height adjustable seat post also includes a plug (822) in the fluid passageway. The plug is moveable in a linear direction between an open position to enable fluid flow through the fluid passageway and a closed position to block fluid flow through the fluid passageway. The height adjustable seat post further includes a motor (522) and a cam assembly (824) to convert rotational motion of the motor to linear movement of the plug.

## Description

This application claims the benefit of U.S. Provisional Patent Application 63/516,574, filed July 31, 2023, which is hereby incorporated by reference in its entirety.

### FIELD OF THE DISCLOSURE

This disclosure relates generally to bicycle components and, more specifically, to height adjustable seat posts for bicycles.

### BACKGROUND

Bicycles are known to have a seat or saddle to support a rider in a seated position. The seat is typically connected to the bicycle frame by a seat post. On most bicycles, the seat post can be manually adjusted to raise or lower the height of the seat to accommodate riders of different heights. The height may also be adjusted to accommodate different riding conditions. Typically, the seat post is mechanically clamped to a tube of the bicycle frame. When the clamp is released, the seat and post are slidable up and down relative to the tube of the bicycle frame to adjust the height of the seat. On some recent higher end bicycles, the seat post is height adjustable during riding of the bicycle by employing some type of hydraulic assist mechanism. For example, manually actuated hydraulic height adjustable or "dropper" seat posts may use a hydraulic pressure differential within the post and require manual operation to adjust the seat post height. Some products may use ANT+ wireless communication technology allowing the rider to wirelessly adjust the seat post.

### SUMMARY

An example height adjustable seat post for a bicycle disclosed herein includes an upper tube and a lower tube configured in a telescopic arrangement. The lower tube is to be coupled to a frame of the bicycle, and the upper tube is to be coupled to a seat. The height adjustable seat post includes a piston in the upper tube. The piston divides the upper tube into a first chamber and a second chamber. The first and second chambers are filled with fluid. The piston defines a fluid passageway between the first chamber and the second chamber. The height adjustable seat post also includes a plug in the fluid passageway. The plug is moveable in a linear direction between an open position to enable fluid flow through the fluid passageway and a closed position to block fluid flow through the fluid passageway. The height adjustable seat post further includes a motor and a cam assembly to convert rotational motion of the motor to linear movement of the plug.

An example bicycle component disclosed herein includes a first tube and a second tube configured in a telescopic arrangement, and a valve disposed in the first tube and dividing the first tube into a first chamber and a second chamber. The first and second chambers are filled with fluid. The valve is operable between a closed state in which the fluid is blocked from flowing across the valve between the first and second chambers and an open state to enable the fluid to flow across the valve between the first and second chambers. The bicycle component also includes a cam assembly including a first cam, a second cam, and a ball between the first cam and the second cam. At least one of the first cam or the second cam having a recess with a ramped profile. The ball is disposed in the recess, and rotation of the second cam causes the ball to move the first cam in a linear direction to open or close the valve.

### BRIEF DESCRIPTION OF THE DRAWINGS

FIG. 1 is a side view of an example bicycle that may employ any of the example height adjustable seat posts disclosed herein.
FIG. 2 is a side view of an example height adjustable seat post in a fully extended position.
FIG. 3 is a side view of the example height adjustable seat post of FIG. 2 in a partially contracted position.
FIG. 4 is an enlarged view of an example control module that can be implemented on the example height adjustable seat post of FIG. 2.
FIG. 5 is a cross-sectional view of the example height adjustable seat post of FIG. 2 in the fully extended position.
FIG. 6 is a cross-sectional view of the example height adjustable seat post of FIG. 3 in the partially contracted position.
FIG. 7 is an enlarged view of the upper callout of FIG. 5 showing an example valve for adding pneumatic gas to the example height adjustable seat post.
FIG. 8 is an enlarged view of the callout of FIG. 6 showing a cross-sectional view of an example piston assembly with an example cam assembly implemented in the example height adjustable seat post.
FIG. 9 is an exploded view of an example motor assembly and example motor assembly housing adjacent a lower end of the example height adjustable seat post of FIG. 2.
FIG. 10 is an exploded view of the example motor assembly of FIG. 9.
FIG. 11 is an assembled view of the example motor assembly of FIG. 10.
FIG. 12 is an enlarged view of the lower callout of FIG. 5 showing a cross-sectional view of the example motor assembly on the lower end of the example height adjustable seat post.
FIG. 13 is a cross-sectional view of the example motor assembly of FIG. 12 taken along a plane that is perpendicular to the cross-sectional view of FIG. 12.
FIG. 14 is an exploded view of the example piston assembly an example valve rod of the example height adjustable seat post of FIG. 2.
FIG. 15 is an enlarged view of the example cam assembly from the example callout in FIG. 14.
FIG. 16A is a cross-sectional view of the example piston assembly and valve rod of FIG. 14 showing an example valve of example piston assembly in a closed state.
FIG. 16B shows the example valve of FIG. 16A in an open state.
FIGS. 17A, 17B, 17C, 17D, and 17E are different views of an example second (lower) cam of the example cam assembly of FIG. 15.
FIGS. 18A, 18B, and 18C are different view of an example first (upper) cam of the example cam assembly of FIG. 15.
FIG. 19A is a top view showing two recesses of the first and second cams of the example cam assembly of FIG. 15 in a first (closed) valve position.
FIG. 19B shows the two recesses in a second (open) valve position.
FIG. 20 is an example graph showing a current profile for opening the example valve of FIGS. 16A and 16B.
FIG. 21 is an example graph showing a current profile for closing the example valve of FIGS. 16A and 16B.
FIG. 22 is an example graph showing a current profile for pulsing open the example valve of FIGS. 16A and 16B.
FIG. 23 is an example graph showing a current profile for harvesting energy during closing of the example valve of FIGS. 16A and 16B.
FIG. 24 is a cross-sectional view of the example height adjustable seat post similar to FIG. 2 but with the example motor assembly installed in an example upper tube with the example piston assembly.
FIG. 25 is an enlarged view of the lower callout of FIG. 24 showing a lower end of an example lower tube of the example height adjustable seat post.
FIG. 26 is an enlarged view of the upper callout of FIG. 24 showing the example piston assembly and the example motor assembly in the example upper tube.
FIG. 27 shows an example integrated valve rod and carrier that can be implemented in any of the example seat posts disclosed herein.
FIG. 28 is a cross-sectional view of the example piston assembly showing an example plug with an example co-molded sealing material.
FIG. 29 is a perspective view of the example plug and example co-molded sealing material of FIG. 28.
FIG. 30a is a perspective view of another example plug that can be implemented in any of the example seat posts disclosed herein.
FIG. 30b is an exploded perspective view of the example plug of FIG. 30a.
FIG. 30c is a side view of the example plug of FIG. 30a.
FIG. 30d is a sectional view of the example plug of FIG. 30a taken along cut line *30d-30d* in FIG. 30c.

The figures are not to scale. Instead, the thickness of the layers or regions may be enlarged in the drawings. In general, the same reference numbers will be used throughout the drawing(s) and accompanying written description to refer to the same or like parts.

Descriptors "first," "second," "third," etc. are used herein when identifying multiple elements or components that may be referred to separately. Unless otherwise specified or understood based on their context of use, such descriptors are not intended to impute any meaning of priority or ordering in time but merely as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Some modern bicycles include height adjustable seat posts, sometimes referred to as dropper seat posts. This type of seat post allows a rider to change the height of their seat while riding the bicycle. For example, the rider can actuate a seat post actuator on the handlebars and then push downward on the seat (e.g., with their bottom) to contract or compress the seat post, which thereby lowers the height of the seat. When the rider stops actuating the seat post actuator, the seat post is maintained in the contracted position. Then, when the rider desires to raise the seat, the rider can actuate the seat post actuator again and the seat post extends or expands to move the seat back to the original height. This lowering ability can be advantageous when the rider is about to ride the bicycle down a steep decline. For instance, it is often desired to lower the seat when riding down a decline so that the rider can stand up and lean backward without the seat hitting their bottom. This lowering ability can also be used to lower the seat before the rider encounters an incline, where the rider typically stands up and peddles. This adjustability can be used in many other scenarios as well.

Some dropper seat posts rely on hydraulic fluid and/or pneumatic pressure controlled by a mechanically or hydraulically actuated valve to change the height of the seat post. More recently, dropper seat posts have used battery powered motors controlled by an electrical signal to actuate the valve. The valve controls the flow of fluid between a positive chamber and a negative chamber in the seat post. Fluid mass is exchanged back-and-forth between the positive and negative chambers to vary the seat post ride height with a valve close-open-close cycle. Some known dropper seats posts include a complex gearing system to convert rotational movement of the motor to linear movement for operating the valve. However, these known gearing systems require the motor axis to be offset from the valve axis. In other words, the motor is axially offset from the valve and other components of the dropper seat post. This offset therefore requires a larger cylindrical volume for the seat post. Further, these known gearing systems suffer from high friction, which reduces electrical efficiency in operating the valve. Other known dropper seat posts rely on lead screws to eliminate the offset, but also suffer from electrical inefficiencies due to the inherent sliding friction. Also, these known dropper seat posts require a positional encoder to monitor the position or state of the valve. These positional encoders increase weight, complexity, and costs associated with the seat post.

Disclosed herein are example height adjustable seats posts with a motor-operated valve and a cam assembly that converts rotational motion of the motor to linear motion for changing the valve state. In particular, the valve may be a linear-type valve, such as a poppet valve, that includes a flow control member (e.g., a plug) that is moveable in a linear direction to operate the valve between an open state to enable the seat post to expand or contract and a closed state to maintain the seat post in a certain position (corresponding to a certain seat height). The cam assembly converts or transforms the rotational motion output by the motor to linear movement for moving the flow control member in the linear direction. The example cam assembly disclosed herein is configured to enable the motor to be axially aligned with the valve. This eliminates the motor-valve offset as seen in other known dropper seat posts. As such, the examples disclosed enable a reduced cylindrical volume for the seat post. Further, the example cam assembly disclosed herein uses one or more ball bearings that have reduced friction and thereby improve electrical efficiency for converting motor rotational movement to linear movement in changing the valve state. Also, in some examples, the seat post does not require a positional encoder as seen in known dropper seat posts. This greatly reduces weight, complexity, and costs associated with the seat post.

An example height adjustable seat post disclosed herein includes an upper tube and a lower tube that are configured in a telescopic arrangement. The lower tube is coupled or mounted to the bicycle frame, and the seat is coupled to the upper tube. The upper tube can slide relative to the lower tube to adjust the height of the seat. The upper tube is sealed on both ends and forms a pneumatic chamber filled with a pressurized gas (e.g., air, nitrogen). The seat post includes a shaft coupled to the lower tube and extending into the upper tube. The seat post includes a piston or valve assembly disposed in the upper tube and coupled to the shaft. The piston assembly includes a piston (which may also be considered a valve body) that divides the pneumatic chamber into an upper pneumatic chamber or positive gas chamber and a lower pneumatic chamber or a negative gas chamber. The positive gas chamber biases the upper and lower tubes away from each other and the negative gas chamber biases the upper and lower tubes toward each other. The piston includes one or more channels or openings that defines a fluid passageway across the piston and between the upper and lower pneumatic chambers. The piston assembly includes a plug, such as a poppet, that is moveable in a linear direction (e.g., up and down) in the fluid passageway to control the flow of fluid between the two chambers. The piston and the plug form a valve, which is operable between a closed state and an open state. The seat post also includes a motor to operate the valve between the closed and open states. When the valve is in the closed state, the valve blocks or prevents gas flow between the two chambers. With respect to the terms "block" or "prevent," for purposes of the following discussion, the terms "block" or "prevent" refer to the most restricted gas flow attainable or desirable. Thus, in one example, the terms "block" or "prevent" mean a stoppage of all gas flow between the two chambers. However, in another example, the terms "block" or "prevent" mean substantially all gas flow is stopped between the two chambers. The pressure in the upper pneumatic chamber is sufficient to support the weight of the rider. When it is desired to raise or lower the seat, the motor is activated to open the valve. When the valve is opened, gas can flow across the piston between the upper and lower pneumatic chambers. This enables the rider to move the upper tube upward or downward relative to the lower tube, thereby raising or lowering the height of the seat. When a desired seat position is reached, the motor is activated to close the valve, which maintains the seat post in its current position.

The example seat post disclosed herein includes a cam assembly that converts rotational motion created by the motor to linear movement of the plug for operating the valve between the open and closed states. In some examples, the cam assembly is disposed in the piston. The cam assembly includes a first cam, a second cam, and one or more ball bearings between the first and second cams. In some examples, the first and second cams are axially aligned with the plug. In some examples, the first and second cams are disc-shaped. The first cam is disposed between the second cam and an end of the plug. The first cam is slidable in a linear direction in the valve, but it restricted from rotating in the piston. The second cam is rotatable in the piston relative to the first cam. The first and second cams have recesses with ramped profiles. The ball bearings are disposed in corresponding recesses in each of the first and second cams. The second cam is operatively coupled to the motor (e.g., by a valve rod and/or gear reduction system). When the motor is activated, the motor rotates the second cam. This rotation causes the ball bearings to roll in the recesses between deeper portions of the recesses and shallower portions of the recesses. For example, when the motor is activated to rotate the second cam in a first direction, the balls are rolled from the deeper portions of the recesses to the shallower portions of the recesses. This pushes the second cam linearly away from the second cam, and thereby moves the plug in a linear direction from a closed position to an open position. When the motor is activated to rotate the cam in the opposite direction, the ball bearings are rolled back to the deeper portions of the recesses, which enables the first cam to move toward the second cam, and thereby enables the plug to move back to the closed position. Therefore, the cam assembly converts rotational motion of the motor to linear movement of the plug of the valve. The example ball bearings generate very little, if any, friction. This enables the valve to be opened and closed with little energy. Further, the example cam assembly enables the motor to be axially aligned with the piston and the plug. This reduces (e.g., minimizes) the cylindrical space needed to accommodate the parts.

In some examples, the ramped profile of the recesses is designed to hold the ball bearings in certain positions corresponding to the open and closed states. This enables the valve to be self-latching. Therefore, the valve can be maintained in the opened or closed states against chamber pressure bias without using electrical energy. Also, the plug (e.g., the poppet) can be arranged so that the plug is biased by the chamber pressure to the closed position. This helps hold the plug in the closed position when the valve is in the closed state. In some examples, the motor control module detects the ramped profile changes from motor current draw and can determine the valve state in order to cease the electrical energy supplied to the motor. This eliminates the need for a positional encoder. Further, ceasing current after a drop in motor current draw prior to a stall condition further reduces energy consumption and thereby improves electrical efficiency.

In some examples disclosed herein the motor is coupled to and/or otherwise disposed on a lower end of the lower tube. In such examples, the seat post includes a valve rod extending through the shaft between the motor and the piston assembly. The motor can be activated to rotate the valve rod and control the state of valve. In some instances, this position of the motor is advantageous because it enables the motor to be physically larger (e.g., with a larger diameter). In some examples, the seat post includes a control module with a power supply (e.g., a battery) to operate (e.g., activate or deactivate) the motor. In some examples, the control module with the power supply is coupled to an outer surface of the lower tube, such as at or near the collar at the upper end of the lower tube. In some examples disclosed herein, the seat post includes a network of wires and/or electrical connectors that electrically connect the control module, which is disposed outside of the tubes, to the motor, which is coupled to the bottom of the seat post. In other examples disclosed herein, the motor is coupled to and/or otherwise integrated with the piston assembly in the upper tube. The seat post can include additional wires that extend through the shaft to electrically couple the control module to the motor.

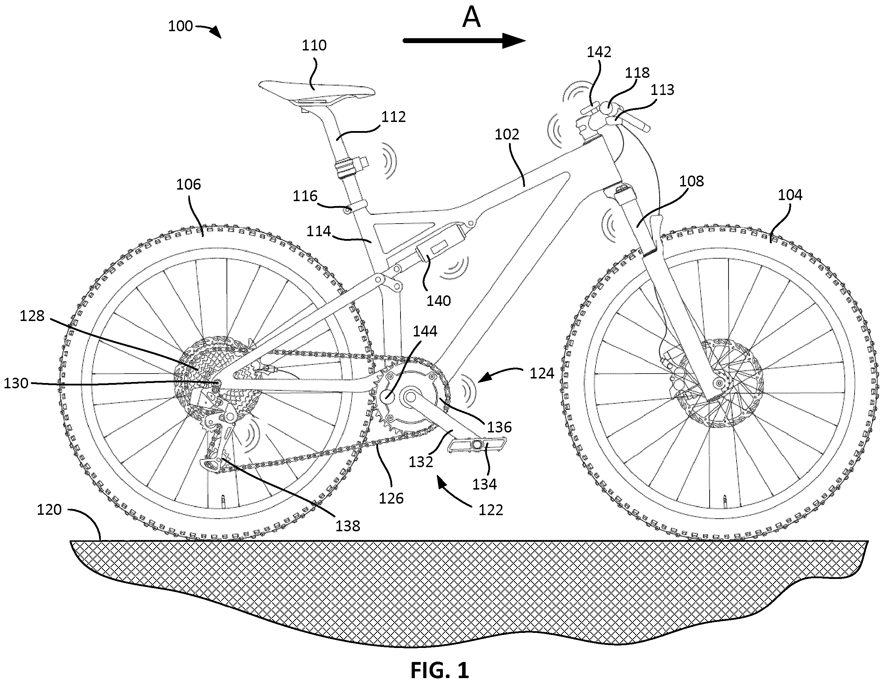

Turning now to the figures, FIG. 1 illustrates one example of a human powered vehicle on which the example seat posts disclosed herein can be implemented. In this example, the vehicle is one possible type of bicycle 100, such as a mountain bicycle. In the illustrated example, the bicycle 100 includes a frame 102 and a front wheel 104 and a rear wheel 106 rotatably coupled to the frame 102. In the illustrated example, the front wheel 104 is coupled to the front end of the frame 102 via a front fork 108. A front and/or forward riding direction or orientation of the bicycle 100 is indicated by the direction of the arrow A in FIG. 1. As such, a forward direction of movement for the bicycle 100 is indicated by the direction of arrow A.

In the illustrated example of FIG. 1, the bicycle 100 includes a seat 110 (sometimes referred to as a saddle) coupled to the frame 102 (e.g., near the rear end of the frame 102 relative to the forward direction A) via a seat post 112 constructed in accordance with the teachings of the present disclosure. In the illustrated example, the seat post 112 is coupled to a seat tube 114 of the frame 102. In some examples, the seat post 112 is coupled to the seat tube 114 by a clamp 116. The seat post 112 is height adjustable to raise or lower the seat 110. In some examples, the bicycle 100 includes a seat post actuation button 113 to control the seat post 112, example operations of which are disclosed in further detail herein. The bicycle 100 also includes handlebars 118 coupled to the frame 102 and the front fork 108 (e.g., near a forward end of the frame 102 relative to the forward direction A) for steering the bicycle 100. In some examples, the seat post actuation button 113 is mounted on the handlebars 118 to enable a rider to interact with the seat post actuation button 113 while riding the bicycle 100. The bicycle 100 is shown on a riding surface 120. The riding surface 120 may be any riding surface such as the ground (e.g., a dirt path, a sidewalk, a street, etc.), a man-made structure above the ground (e.g., a wooden ramp), and/or any other surface.

In the illustrated example, the bicycle 100 has a drivetrain 122 that includes a crank assembly 124. The crank assembly 124 is operatively coupled via a chain 126 to a sprocket assembly 128 mounted to a hub 130 of the rear wheel 106. The crank assembly 124 includes at least one, and typically two, crank arms 132 and pedals 134, along with at least one front sprocket, or chainring 136. A rear gear change device 138, such as a derailleur, is disposed at the rear wheel 106 to move the chain 126 between different sprockets of the sprocket assembly 128. Additionally or alternatively, the bicycle 100 may include a plurality of front chainrings and a front gear change device to move the chain 126 between the plurality of chainrings.

The example bicycle 100 can include a suspension system having one or more suspension components. In the illustrated example, the bicycle 100 includes a rear suspension component 140. In this example, the rear suspension component 140 is implemented as or includes a shock absorber. In some examples, the front fork 108 is also implemented as a front suspension component. For example, a spring can be integrated into one of the legs and a damper can be integrated into the other leg. The front fork 108 and the rear suspension component 140 absorb shocks and vibrations while riding the bicycle 100 (e.g., when riding over rough terrain). In other examples, the front fork 108 and/or the rear suspension component 140 may be integrated into the bicycle 100 in other configurations or arrangements.

In some examples, one or more of the components of the bicycle 100 may include electronic components for controlling and/or monitoring various aspects of the bicycle 100. For example, the bicycle 100 of FIG. 1 includes a control device or bicycle computer 142 that is mounted on the handlebars 118. The bicycle computer 142 may wirelessly communicate with the seat post 112, the rear gear change device 138, the front fork 108, and/or the rear suspension component 140 to collect data and/or control operation of the respective components. The bicycle computer 142 may also wirelessly communicate with a power meter 144 of the crank assembly 124. The foregoing components may be paired to a wireless network.

While the example bicycle 100 depicted in FIG. 1 is a type of mountain bicycle, the example height adjustable seat posts disclosed herein can be implemented on other types of bicycles. For example, the example seat posts disclosed herein may be used on road bicycles, as well as bicycles with mechanical (e.g., cable, hydraulic, pneumatic, etc.) and nonmechanical (e.g., wired, wireless) drive systems. The example seat posts disclosed herein may also be implemented on other types of two-wheeled, three-wheeled, and four-wheeled human powered vehicles. Further, the example seat posts disclosed herein can be used on other types of vehicles, such as motorized vehicles (e.g., a motorcycle).

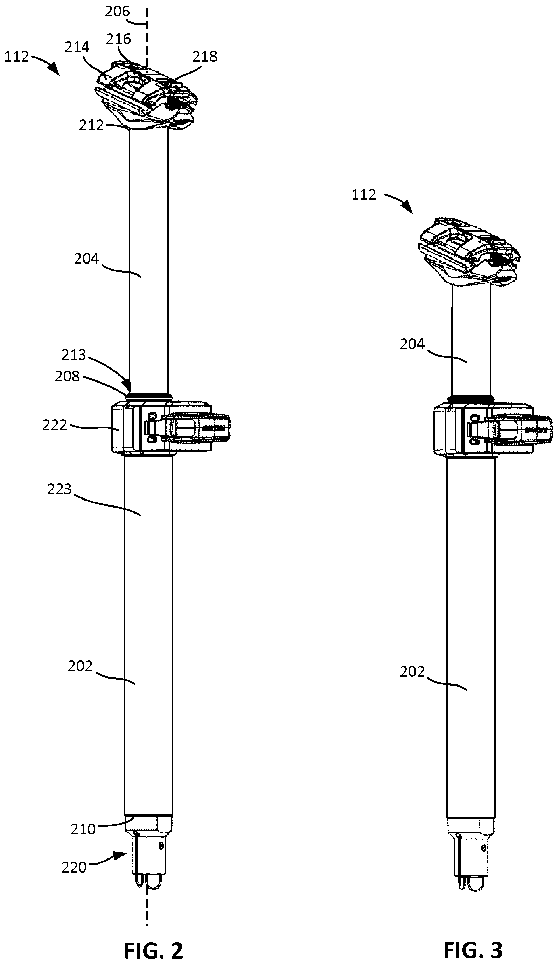

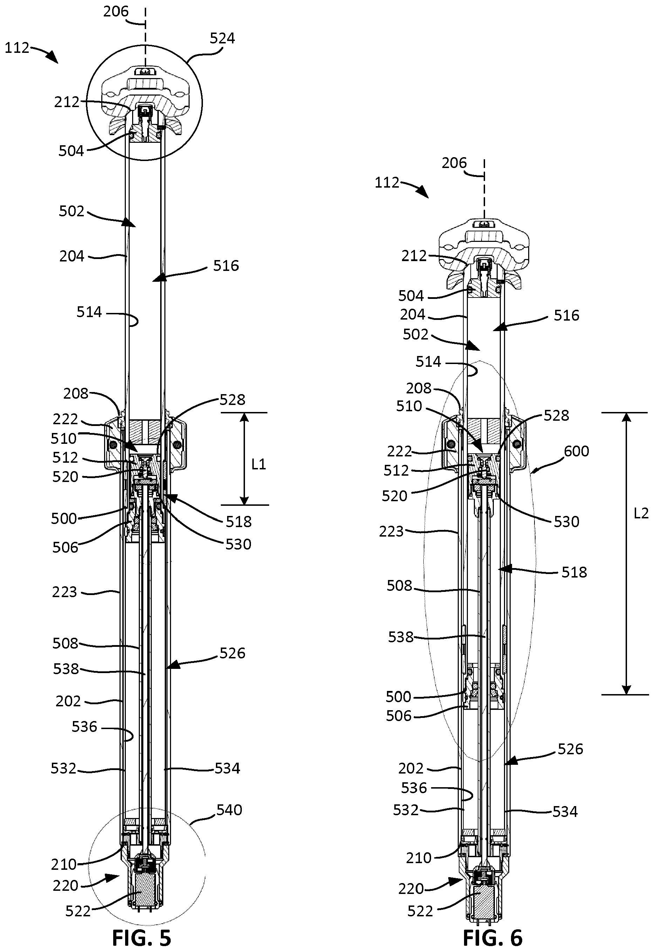

FIG. 2 is a perspective view of the example height adjustable seat post 112 that can be implemented on the bicycle 100 of FIG. 1. The seat post 112 can also be referred to as a dropper seat post or seat post assembly. The length or height of the example seat post 112 is adjustable so that the height of the seat 110 (FIG. 1) can be raised or lowered. In the illustrated example, the seat post 112 includes a first tube 202, referred to herein as a lower tube 202, and a second tube 204, referred to herein as an upper tube 204. The lower and upper tubes 202, 204 may also be referred to as seat post portions or segments. As shown in FIG. 2, the lower and upper tubes 202, 204 are configured in a coaxial arrangement and aligned along an axis 206. The axis 206 corresponds to a central or longitudinal axis of the seat post 112. The lower tube 202 has a first end 208, referred to herein as an upper end 208, and a second end 210, referred to herein as a lower end 210, opposite the upper end 208. The upper tube 204 similarly has a first end 212, referred to herein as an upper end 212, and a second end 500 (shown in FIGS. 5 and 6), referred to herein as a lower end 500, opposite the upper end 212. The upper tube 204 and the lower tube 202 are configured in a telescopic arrangement. In particular, in this example, the upper tube 204 extends into an opening 213 in the upper end 208 of the lower tube 202. As such, the upper tube 204 is at least partially disposed in the lower tube 202. The upper tube 204 is slidable into and out of the opening 213 in the lower tube 202, which enables the overall height or length of the seat post 112 to change. In other examples, the lower and upper tubes 202, 204 can be configured such that the lower tube 202 extends into the lower end 500 of the upper tube 204.

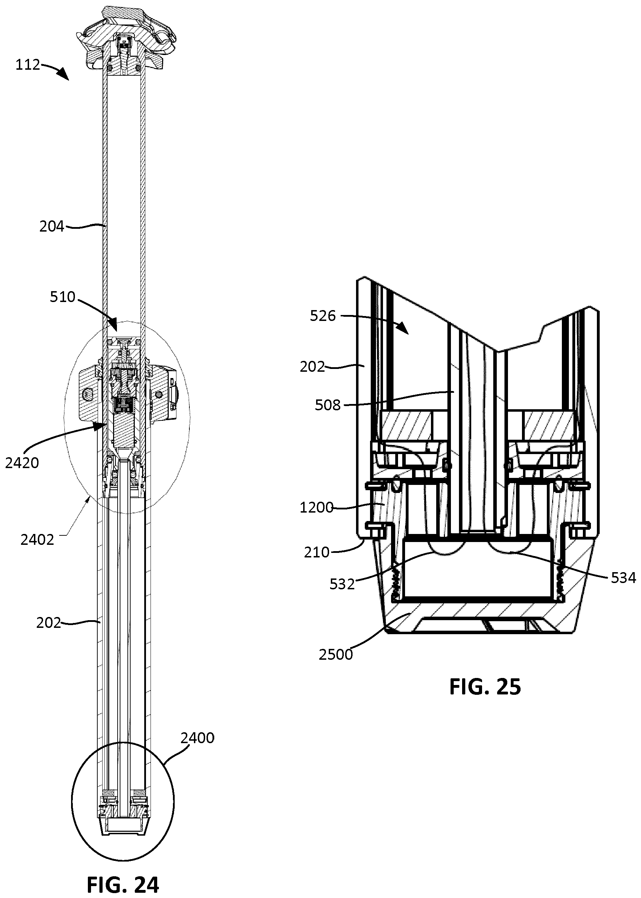

In the illustrated example, the seat post 112 includes a seat clamp 214 that is coupled (e.g., welded, bolted, threaded, etc.) to the upper end 212 of the upper tube 204. The seat clamp 214 is used to couple the seat 110 (FIG. 1) to the seat post 112. In this example, the seat clamp 214 includes two threaded fasteners 216, 218 (e.g., bolts) that can be tightened to secure the seat 110 to the upper tube 204. In other examples, the seat post 112 can include other mechanisms for attaching to the seat 110. In the illustrated example, the seat post 112 includes a motor assembly 220. The motor assembly 220 includes a motor that is used to operate a valve in the seat post 112, disclosed in further detail herein. In this example, the motor assembly 220 is coupled to the lower end 210 of the lower tube 202. The motor assembly 220 may also be referred to as an end cap on the lower end 210 of the lower tube 202. In other examples, the motor assembly 220 can be disposed in other locations, an example of which is described in connection with FIGS. 24-26.

When the seat post 112 is installed on the bicycle 100 (FIG. 1), the lower tube 202 is coupled to the frame 102 (FIG. 1). For example, the lower tube 202 can be inserted into the seat tube 114 (FIG. 1) and secured by the clamp 116 (FIG. 1). The upper tube 204 extends upward from the lower tube 202 and supports the seat 110 (FIG. 1). As disclosed in further detail herein, the seat post 112 has an internal valve that enables the upper tube 204 to move (e.g., slide) downward relative to the lower tube 202 and provides rebounding force to move the upper tube 204 upward relative to the lower tube 202. This enables a rider to easily lower the height of the seat 110 or raise the height of the seat 110. The seat post 112 is adjustable between a fully extended position (sometimes referred to as a top-out position), shown in FIG. 2, and a fully contracted position in which the upper tube 204 is moved into the lower tube 202 until a stop or limit is reached. The seat post 112 can also be expanded/contracted to any position between the fully extended position and the fully contracted position and maintained in place. For example, FIG. 3 shows an example in which the upper tube 204 has been partially moved into the lower tube 202. As such, the seat 110 (FIG. 1) would be lowered or closer to the ground compared to the position in FIG. 2.

In the illustrated example of FIG. 2, the seat post 112 includes a control module 222, which may also be referred to as a controller or control unit. The control module 222 includes a power supply (e.g., a battery) and circuitry (e.g., processor circuity, logic circuitry, etc.) to operate the internal valve. In this example, the control module 222 is coupled to an outer surface 223 of the lower tube 202 at or near the upper end 208 of the lower tube 202. Some known dropper posts locate the control module on the seat clamp. However, this location can interfere with the rear tire clearance. Therefore, locating the control module 222 at the upper end 208 of the lower tube 202, adjacent the overlap region, can be advantageous to improve rear wheel clearance. This location also helps maintain a minimal ratio of drop height to overall length.

As an example operation, if a rider desires to lower the seat 110 (FIG. 1), the rider actuates a seat post actuator such as, in this example, the seat post actuation button 113 (FIG. 1). In FIG. 1 the seat post actuation button 113 is mounted on the handlebars 118 such that the rider can actuate the seat post actuation button 113 with one of his/her fingers (e.g., their thumb). Alternatively, the seat post actuation button 113 may be a lever or other type of user interface such a display device with a touch screen. When the seat post actuation button 113 is pressed, the seat post actuation button 113 transmits a signal (e.g., a wireless signal) to the control module 222. The control module 222 receives the signal from the seat post actuation button 113 and activates the motor assembly 220 to open the internal valve, which is disposed in a pneumatic chamber in the upper tube 204, as disclosed in further detail herein. While the internal valve is open, the rider can push downward on the seat 110, which slides the upper tube 204 into the lower tube 202, as shown in the position of FIG. 3. In some examples, the rider can apply this force by sitting on the seat 110 and applying the downward force with their bottom. When the seat 110 reaches the desired height, the rider can release the seat post actuation button 113. In response, the control module 222 closes the internal valve, which maintains the upper tube 204 in place relative to the lower tube 202. When the rider desires to raise the seat 110, the rider can press the seat post actuation button 113 again. The control module 222 receives the signal and opens the internal valve. When little or no downward force is acting on the seat 110, the internal pneumatic system pushes the upper tube 204 upward from the lower tube 202, thereby moving the seat 110 upward. When the desired position is reached, the rider can release the seat post actuation button 113, which causes the internal valve to close and holds the seat post 112 in the current position. Therefore, the seat post height can be easily adjusted by the rider.

In some examples, to activate the internal valve, the rider pushes and holds the seat post actuation button 113. As long as the seat post actuation button 113 is depressed, the valve is held in the open state, which enables the upper tube 204 to slide upward or downward relative to the lower tube 202. When the rider releases the seat post actuation button 113, the interval valve is closed, which maintains the upper tube 204 in place. However, in other examples, the system can be configured such that the rider may press and release the seat post actuation button 113 to cause the valve to open, and then the rider presses the seat post actuation button 113 a second time to close the valve.

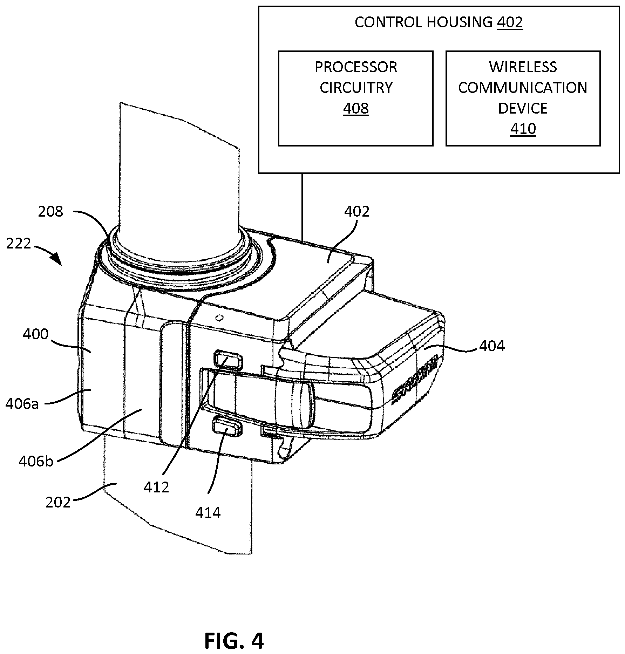

FIG. 4 is an enlarged view of the control module 222 on the lower tube 202. In the illustrated example, the control module 222 includes a collar 400, a control housing 402 coupled to the collar 400, and a power supply, in this example a battery 404, coupled to the control housing 402. The collar 400 is wrapped around the lower tube 202 and is used to couple the control module 222 to the lower tube 202. In this example, the collar 400 includes a first portion 406a and a second portion 406b that are coupled together and therefore clamped around the lower tube 202. In some examples the first and second portions 402a, 402b are coupled by a snap-fit and/or threaded fasteners (e.g., screws, bolts, etc.). The control housing 402 contains electronic components for receiving control signals and operating the internal valve (e.g., opening the valve, closing the valve, etc.). For example, FIG. 4 shows a block diagram of the control housing 402. The control housing 402 includes processor circuitry 408 and a wireless communication device 410. The wireless communication device 410 includes a receiver. The wireless communication device 410 can receive wireless control/command signals from the seat post actuation button 113 and/or another bicycle component such as the bicycle computer 142. Additionally, in some examples, the wireless communication device 410 can include a transmitter (e.g., a transceiver) and may send wireless control/command signals to the seat post actuation button 113 and/or other bicycle components such as the bicycle computer 142. In response to receiving a command, for example, the processor circuitry 408 activates a motor (e.g., by applying a current or voltage to the motor) in the motor assembly 220 to open the valve in the upper tube 204 to enable the seat post 112 to expand or contract. When the seat post actuation button 113 is released, no control/command signals are received and the processor circuitry 408 activates the motor to close the valve, thereby maintaining the seat post 112 in position. In other examples, a second or separate control/command signal is received when the seat post actuation button 113 is released. The wireless communication device 410 is configured to communicate wirelessly, and as such includes one or more antennae. The wireless communication device 410 provides for wireless communication in any known or later developed format. Although the present specification describes components and functions that may be implemented in particular embodiments with reference to particular standards and protocols, the examples disclosed herein are not limited to such standards and protocols. For example, standards for Internet and other packet switched network transmission (e.g., TCP/IP, UDP/IP, HTML, HTTP, HTTPS) represent examples of the state of the art. Such standards are periodically superseded by faster or more efficient equivalents having essentially the same functions. Bluetooth^{®}, ANT+^{™}, ZigBee, WiFi and/or AIREA^{™} standards may also, or alternatively, be used. Accordingly, replacement standards and protocols having the same or similar functions as those disclosed herein are considered equivalents thereof.

As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmable with instructions to perform specific operations and including one or more semiconductor-based logic devices (e.g., electrical hardware implemented by one or more transistors). Examples of processor circuitry include programmable microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of processor circuitry is/are best suited to execute the computing task(s).

The battery 404 supplies power to the electronic components of the control housing 402, which controls the motor assembly 220. The battery 404 also supplies power to energize or activate a motor of the motor assembly 220 (FIG. 2). In some examples, the battery 404 is removeable, such as by pressing a release tab or button or sliding the battery 404 in a certain direction away from the control housing 402 (FIG. 4). In some examples, the battery 404 can be removed, charged, and reattached to the control housing 402. In other examples, the battery 404 may be fixed to the seat post 112 in a manner that requires disassembly to remove (e.g., removing one or more screws). In some examples, the battery 404 can be charged while the battery 404 is attached to the control housing 402. The battery 404 may be charged by wire or wirelessly. For example, the battery 404 can have a charging port or charging surface for charging. In other examples, the battery 404 may not be rechargeable and must be replaced with a new battery. In this example, the power supply for powering the motor is attached to the collar 400 at the upper end 208 of the lower tube 202. In some examples, the battery 404 is fixed relative to the lower tube 202 (via the collar 400), and fixed relative to the lower tube 202 when installed on the bicycle 100 (FIG. 1). In other examples, the battery 404 can be located in various locations, such as the clamp 116 (FIG. 1), the collar 400 (FIG. 4), or the lower end 210 of the lower tube 202. The battery 404 may be oriented horizontally, vertically, or at an angle. In some examples, the battery 404 may be located in-front of the lower tube axis or behind the lower seat tube axis. In other examples, the battery 404 can be located on either side of the lower tube axis such that that the center plane of the bicycle 100 does not intersect the battery 404. The battery 404 may also be mounted remote from the seat post 112 and connected to the seat post 112 by electrical wires (e.g., one or more wires extending through or along the frame 102).

In some examples, such as shown in FIG. 4, the control module 222 includes a control button 412 and a light 414 (e.g., a light-emitting-diode (LED)). The button 412 can be used to turn on/off the control module 222 and/or control various functions of the control module 222. The light 414 can illuminate (e.g., blink, stay a solid color, switch colors, etc.) to indicate different modes or states of the control module 222. For example, the button 412 may be pressed to initiate a pairing process of pairing the seat post 112 to the seat post actuation button 113 on the handlebars 118 and/or other devices such as the bicycle computer 142. In response to the button 412 being pressed, the light 414 may flash indicating the pairing process has begun. Once the seat post 112 and the bicycle computer 142 have been successfully paired, for example, the light 414 may flash rapidly, indicating to the rider that the pairing was successful.

FIG. 5 is a cross-sectional view of the seat post 112 in the fully extended position corresponding to FIG. 2, and FIG. 6 is a cross-sectional view of the seat post 112 in a partially contracted position corresponding to FIG. 3. FIGS. 5 and 6 are described together. As shown in FIGS. 5 and 6, the upper tube 204 has a lower end 500. The lower end 500 is disposed in the lower tube 202. As such, the lower and upper tubes 202, 204 overlap at an area or region of overlap. In FIG. 5, the lower and upper tubes 202, 204 overlap by a length L1, and in FIG. 6, the lower and upper tubes 202, 204 overlap by a length of L2, which is greater than L1. As such, the height or length of the seat post 112 in FIG. 6 is less than the height or length of the seat post 112 in FIG. 5.

As shown in FIGS. 5 and 6, the upper tube 204 defines a chamber 502. The chamber 502 is filled with fluid (e.g., pneumatic gas), as discussed in further detail herein. The seat post 112 includes an upper plug 504 (e.g., an upper seal or bushing) coupled to the upper tube 204 and disposed in the upper tube 204 at or near the upper end 212. The seat post 112 also includes a lower plug 506 (e.g., a lower seal or bushing) coupled to the upper tube 204 and disposed in the upper tube 204 are or near the lower end 500. The upper and lower plugs 504, 506 seal the ends of the upper tube 204 to maintain the fluid in the chamber 502.

In the illustrated example of FIGS. 5 and 6, the seat post 112 includes a shaft 508, which may be referred to as a rod or valve rod housing. The shaft 508 is disposed in the lower tube 202 and coupled to the lower tube 202 (e.g., near the lower end 210), such that the shaft 508 is fixed relative to the lower tube 202. The shaft 508 extends upward through the lower tube 202 and through the lower plug 506 and into the upper tube 204. In particular, the shaft 508 extends through the lower plug 506 and into the chamber 502 defined in the upper tube 204. The lower plug 506 is slidable up and down along the shaft 508 as the seat post 112 expands or contracts.

In the illustrated example of FIGS. 5 and 6, the seat post 112 includes a piston assembly 510 disposed in the upper tube 204. The piston assembly 510 may also be referred to as a valve assembly or flow control assembly. The piston assembly 510 is disposed in the chamber 502 of the upper tube 204 and is coupled to the shaft 508. As the seat post 112 expands or contracts, the piston assembly 510 moves closer to or further away from the upper and lower ends 212, 500 of the upper tube 204. The piston assembly 510 includes a piston 512 that is sealed against an inner surface 514 of the upper tube 204. The inner surface 514 of the upper tube 204 is slidable up and down along the piston 512 as the seat post 112 expands or contracts. The piston assembly 510 and, in particular, the piston 512, divides the chamber 502 of the upper tube 204 into a first chamber 516 (between the piston 512 and the upper plug 504) and a second chamber 518 (between the piston 512 and the lower plug 506). The first and second chambers 516, 518 may also be referred to as upper and lower chambers, respectively. The first chamber 516 is bound by the piston assembly 510, the upper plug 504, and the upper tube 204. The second chamber 518 is bound by the piston assembly 510, the lower plug 506, the upper tube 204, and the shaft 508. The volumes of the first and second chambers 516, 518 change as the upper tube 204 moves up and down relative to the piston assembly 510. The first and second chambers 516, 518 are filled with a fluid. In this example, the seat post 112 is based on a pneumatic platform. Therefore, the first and second chambers 516, 518 can be filled with a pressurized gas, such as nitrogen or air. In other examples the first and second chambers 516, 518 can be filled with another type of compressible gas. The piston assembly 510 controls the flow of fluid (e.g., pressurized gas) across the piston 512 and between the first and second chambers 516, 518.

In the illustrated example of FIGS. 5 and 6, the seat post 112 includes a valve 520. In this example, the valve 520 is incorporated into and/or integrated with the piston assembly 510. As such, the valve 520 is disposed in the upper tube 204 and at least partially in a region of overlap (e.g., L1 or L2) between the upper tube 204 and the lower tube 202. In this example, the valve 520 is a poppet valve, which includes a poppet that is moveable in a linear direction to open or close the valve 520. However, in other examples, other types of valves can be used. The valve 520 can be operated (e.g., opened or closed) to control the flow of gas across the piston 512 between the first and second chambers 516, 518. In particular, the valve 520 is operable between a closed state in which the fluid (e.g., pressurized gas) is blocked from flowing across the piston 512 between the first and second chambers 516, 518, which maintains the lower and upper tubes 202, 204 in their current position, and an open state to enable the fluid to flow across the piston 512 between the first and second chambers 516, 518, which enables the upper tube 204 to move relative to the lower tube 202 for adjusting the height of the seat 110 (FIG. 1).

To operate or control the valve 520, the motor assembly 220 includes a motor 522. Therefore, the motor 522 controls the state of the valve 520. However, in other examples, the valve 520 can be operated by a solenoid or other type of actuator. In the illustrated example, the motor assembly 220 (along with the motor 522) is coupled to the lower end 210 of the lower tube 202. In other examples, the motor assembly 220 can be coupled to or integrated into the piston assembly 510 in the upper tube 204 (an example of which is disclosed in connection with FIGS. 24-26).

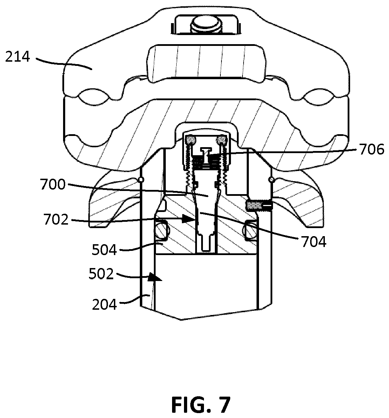

Referring briefly to FIG. 7, FIG. 7 is an enlarged view of the callout 524 of FIG. 5 showing the upper plug 504. The upper plug 504 includes a valve 700, which enables a user to add or remove pneumatic fluid to/from the chamber 502 in the upper tube 204. The valve 700 is disposed in an opening 702 through the upper plug 504. In this example, the valve 700 is implemented as a Schrader valve. However, in other examples, the valve 700 may be implemented as another type of valve, such as a Presta valve. The valve 700 includes a valve body 704 (sometimes referred to as a stem) and a core 706 (e.g., a poppet valve) that controls the flow of fluid through the valve body 704. A user can remove the seat clamp 214 and access the valve 700 to add or remove pneumatic fluid to/from the chamber 502.

Referring back to FIGS. 5 and 6, in the illustrated example, the first chamber 516 is a positive pressure chamber and the second chamber 518 is a negative pressure chamber. The first chamber 516 and the second chamber 518 are pressure sealed chambers. The lower tube 202 defines a third chamber 526 between the lower plug 506 and the motor assembly 220. The third chamber 526 is considered a pressure control chamber. The volume of the third chamber 526 changes based on the actuated position. In some examples, the third chamber 526 is vented to the atmosphere and therefore contains air at atmospheric pressure. However, in other examples, the third chamber 526 is also a pressure sealed chamber (e.g., containing pressurized air or nitrogen). In such an example, the air in the third chamber 526 may be compressed as the upper tube 204 is moved downward. This compressed air can provide a biasing force to return the seat post 112 to the fully extended position. In other examples, the third chamber 526 can have other mechanisms for compensating for the change in volume, such as a floating piston or a deformable bladder. The first chamber 516, the second chamber 518, and the third chamber 526 may be any number of shapes and/or sizes. For example, the first chamber 516, the second chamber 518, and the third chamber 526 may be cylindrically shaped (e.g., with outer diameters between 27 millimeters (mm) and 35 mm, respectively) and may be sized for a particular maximum post adjustment (e.g., 150 mm).

As shown in FIGS. 5 and 6, the piston 512 has a first side 528 facing the upper plug 504 and a second side 530 opposite the first side 528 and facing the lower plug 506. An axial surface area (as viewed along the axis 206) of the first side 528 of the piston 512 is greater than an axial surface area of the second side 530 of the piston 512. This is because a portion of the axial surface area of the second side 530 is reduced by the cross-sectional area of the shaft 508. When the valve 520 is in the closed state and the seat post 112 is in the fully extended position (FIG. 5), the first chamber 516 acts as a spring and is configured to bias the upper tube 204 towards the fully extended position of the seat post 112. The first side 528 and the second side 530 of the piston 512 are sized and shaped, and the first chamber 516 and the second chamber 518 are respectively pressurized when the seat post 112 is in the fully extended position, such that the gas within the first chamber 516 supports the weight of the rider. In some examples, the seat 110 sags less than 10 mm as a result of the weight of the rider on the seat 110 when the seat post 112 is in the fully extended position. The seat post 112 operates because the axial surface area of the first side 528 of the piston 512 versus a pneumatic pressure ratio between the first chamber 516 and the second chamber 518 holds up the rider based on the force calculation. This is also dependent on the volume of the second chamber 518 at the fully extended position of the seat post 112. In the illustrated example of FIG. 5, the volume of the first chamber 516 is greater than the volume of the second chamber 518 when the seat post 112 is in the fully extended position. In some examples, the volume of the second chamber 518 may be no more than twenty percent of the volume of the first chamber 516 when the seat post 112 is in the fully extended position. In other examples, the first and second chambers 516, 518 may have a different volume ratio in the fully extended position. For example, the volume of the second chamber 518 may be no more than ten percent, five percent, or three percent of the volume of the first chamber 516 when the seat post 112 is in the fully extended position. This makes the seat post 112 act like a zero negative pressure preloaded pneumatic spring. This is the principal that holds up the rider with a feel the rider experiences as being rigid. At the fully extended position of the seat post 112, the seat 110 may move a small amount, but this movement is typically not perceivable to the rider.

As an example operation, assume the seat post 112 is in the fully extended position shown in FIG. 5 and the rider desires to lower the seat 110 (FIG. 1). The rider presses a seat post actuation button 113 (FIG. 1) on the handlebars 118 (FIG. 1), and the control module 222 activates the motor 522 to open the valve 520. When the valve 520 is open, a force can be applied downward on the seat 110 to compress the seat post 112. For example, the rider can sit (or partially sit) on the seat 110 to apply downward pressure with his/her bottom. This downward pressure forces fluid (e.g., pressurized gas) from the first chamber 516 to flow through the valve 520 and across the piston 512 and into the second chamber 518. This enables the upper tube 204 to move downward relative to the upper tube 204, thereby lowering the seat 110. As the upper tube 204 is moved downward, the volume of the first chamber 516 is reduced and the volume of the second chamber 518 is increased. The rider can move (e.g., lower) the seat 110 to any position between the fully extended position and a fully contracted position. FIG. 6 shows the seat post 112 as in an intermediate position between the fully extended position and the fully contracted position.

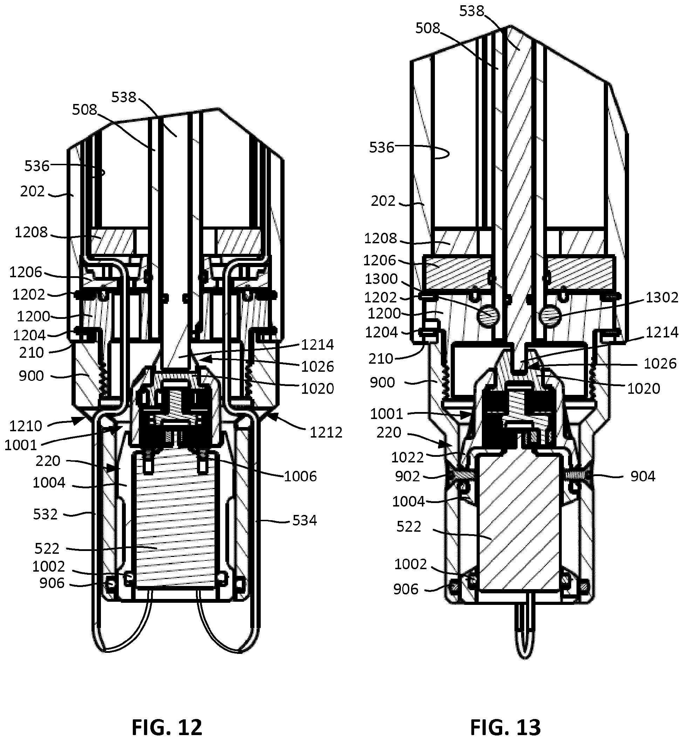

When the seat 110 is at a desired position, such as the position in FIG. 6, the rider can release the seat post actuation button 113 (FIG. 1). The control module 222 activates the motor 522 to close the valve 520. When the valve 520 is closed, the fluid (e.g., pressurized gas) is prevented from flowing across the piston assembly 510 between the first chamber 516 and the second chamber 518. This limits or prevents further relative movement of the upper tube 204 relative to the lower tube 202. When the valve 520 is closed, the balance of forces in the system is such that the axial pressure force acting on the first side 528 of the piston 512 is approximately equal to the axial pressure force acting on the second side 530 of the piston 512. Using a compressible fluid such as air enables the pressure chamber to act as a compression spring when a downward force is applied on the upper tube 204. Therefore, when the rider sits on the seat 110, the seat post 112 can support the weight of the rider. In some examples, when the seat post 112 is in an intermediate position (between the fully extended position and the fully contracted position), the seat 110 may sag a small amount (e.g., 40 mm or less) as a result of the weight of the rider. The seat post 112 can be maintained at any position between the fully extended position and the fully contracted position. If the seat post 112 is moved to the fully contracted position, the seat clamp 214 contacts the upper end 208 of the lower tube 202 and/or the lower plug 506 contacts a disc 1208 (shown in FIG. 12) in the lower end 210 of the lower tube 202. This provides a hard stop to prevent further movement. When the seat post 112 is in the fully contracted position, the seat 110 may not sag due to this hard stop. In some examples, when the seat post 112 is in the fully expanded position (FIG. 5), the piston 512 is engaged with a top of the lower plug 506. This forms a limit or stop that prevents the upper tube 204 from moving any further upward relative to the lower tube 202.

When it is desired to raise the seat post 112 back to the fully extended position, the rider presses on the seat post actuation button 113 (FIG. 1), and the control module 222 activates the motor 522 to open the valve 520. With no external downward force acting on the seat 110 (FIG. 1), the pressure in the first chamber 516 the upper tube 204 causes the upper tube 204 to move upward relative to the lower tube 202 back to the fully extended position. This is because the axial surface area of the first side 528 of the piston 512 is greater than the axial surface area on the second side 530 of the piston 512. As such, the force of the pressure in the first chamber 516 acting on the first side 528 of the piston 512 is larger than the force from the pressure in the second chamber 518 acting on the second side 530 of the piston 512. As a result, the upper tube 204 is forced upward to the fully extended position. As the upper tube 204 moves upward, fluid flows across the valve 520 from the second chamber 518 to the first chamber 516. Therefore, the axial pressure force imbalance biases the seat post 112 towards the fully extended position. This enables the seat post 112 to automatically expand back to the fully extended position shown in FIG. 5. When the seat post 112 is fully extended, the rider can release the seat post actuation button 113, which activates the motor 522 to close the valve and thereby maintain the seat post 112 in the fully extended position. Therefore, the pressurized gas in the first chamber 516 biases the upper and lower tubes 204, 202 away from each other, and the pressurized gas in the second chamber 518 biases the upper and lower tubes 204, 202 toward each other.

As disclosed above, in some examples, the third chamber 526 is vented to the atmosphere. As such, the third chamber 526 provides minimal, if any, biasing force on the upper tube 204. However, in other examples, the third chamber 526 can be sealed and pressurized with a positive pressure. In such an example, when the upper tube 204 is moved downward, the volume of the third chamber 526 is reduced, which increases the pressure in the third chamber 526. This pressure acts upward on the lower plug 506 to help bias the upper tube 204 to the fully extended position.

As disclosed above, the control module 222 includes the processor circuitry 408 (FIG. 4), which is configured to control and operate the motor 522 to open and close the valve 520. In the illustrated example of FIGS. 5 and 6, the control module 222 is located on the outer surface 223 of the lower tube 202, at or near the upper end 208 of the lower tube 202, while the motor 522 is coupled to the lower end 210 of the lower tube 202. The seat post 112 can include one or more wires and/or electrical connections to form an electrical path between the control module 222 and the motor 522. This enables power and/or command signals to be transferred between the control module 222 and the motor 522. For example, as shown in FIGS. 5 and 6, the seat post 112 includes first and second wires 532, 534 disposed in the lower tube 202. In some examples, the first and second wires 532, 534 are positive and negative wires. The first and second wires 532, 534 are electrically coupled to the control module 222. The first and second wires 532, 534 extend through the lower tube 202 to the motor assembly 220. In other words, in this example, the first and second wires 532, 534 extend between the upper end 208 and the lower end 210 of the lower tube 202. In the illustrated example, the first and second wires 532, 534 are disposed along an inner surface 536 of the lower tube 202. In some examples, the first and second wires 532, 534 are disposed with respective channels formed along the inner surface 536 of the lower tube 202. In some examples the channels are formed of the same material (e.g., aluminum) as the lower tube 202. In other examples, the channels may be formed through the wall of the lower tube 202. In the illustrated example, the first and second wires 532, 534 are disposed on opposite sides of the lower tube 202. This may be beneficial to provide separation between the positive and negative wires. However, in other examples, the first and second wires 532, 534 can be disposed adjacent each other. In some examples, each of the wires 532, 534 has an insulated sheath. In other examples, the wires 532, 534 may be sheathed together.

To transfer rotational motion from the motor assembly 220 to the piston assembly 510, the seat post 112 includes a valve rod 538. The valve rod 538 is aligned along the axis 206 of the seat post 112. In the illustrated example of FIGS. 5 and 6, the valve rod 538 is disposed in the shaft 508. In particular, the valve rod 538 extends through the shaft 508 and between the piston assembly 510 and the motor assembly 220. The valve rod 538 is rotatable in the shaft 508. The ends of the valve rod 538 are coupled to the piston assembly 510 and the motor assembly 220. As such, the motor 522 can be activated to rotate the valve rod 538 to change the state of the valve 520. For example, the motor 522 can be activated to rotate the valve rod 538 in a first direction to open the valve 520 and a second direction (the opposite direction) to close the valve 520. In some examples, the motor 522 is a brushed, coreless direct-current (DC) motor. In other examples, other types of motors can be implemented. The motor 522 is powered or activated by the control module 222. As disclosed above, the wires 532, 534 are routed through the lower tube 202 between the control module 222 and the lower end 210 of the lower tube 202 to electrically connect the control module 222 to the motor 522.

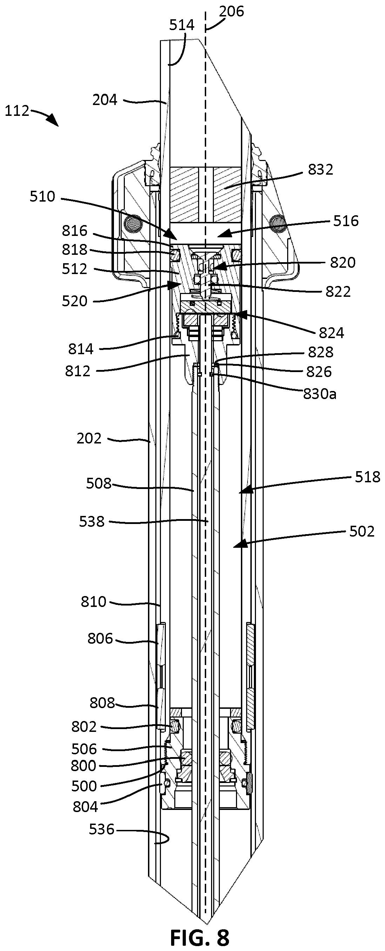

As shown in FIGS. 5 and 6, the motor 522 is axially aligned along the axis 206. As such, the motor 522 is axially aligned with the piston assembly 510, including the valve 520, and a plug 822 (FIG. 8) of the valve. This reduces the horizontal or cylindrical size requirements of the seat post 112.

FIG. 8 is an enlarged view of the callout 600 of FIG. 6. As shown in FIG. 8, the lower plug 506 is threadably coupled to the lower end 500 of the upper tube 204, which seals the lower end 500 of the upper tube 204. The seat post 112 includes a shaft seal 800 between the lower plug 506 and the shaft 508 to prevent leakage through the lower plug 506. The shaft seal 800 also enables the lower plug 506 to slide smoothly up and down along the shaft 508 as the seat post 112 expands and contracts. The seat post 112 includes a first outer seal 802 between the lower plug 506 and the inner surface 514 of the upper tube 204, and a second outer seal 804 between the lower plug 506 and the inner surface 536 of the lower tube 202. The seat post 112 also includes first and second seals 806, 808 between an outer surface 810 of the upper tube 204 and the inner surface 536 of the lower tube 202. In other examples, the seat post 112 can include more or fewer seals and/or the seals can be arranged in other configurations.

In the illustrated example of FIG. 8, the piston assembly 510 includes the piston 512. The piston 512 may also be referred to as a valve body. The piston 512 is coupled to the shaft 508. In particular, in this example, the piston assembly 510 includes a fitting 812. The fitting 812 is threadably coupled to the piston 512 (e.g., to a bottom side of the piston 512), and the shaft 508 is threadably coupled to the fitting 812. As such, the piston 512 is coupled to the shaft 508 via the fitting 812. A fitting seal 814 (e.g., an o-ring) is disposed between the piston 512 and fitting 812, which helps fluidly separate the negative chamber pressure outside of the piston 512 from the atmospheric pressure in the lower portion of the piston 512. In some examples, the piston 512 and the fitting 812 may be considered first and second piston body portions that together form or define the piston 512. In some examples, the piston 512 and the fitting 812 are constructed of metal and/or a plastic polymer. In other examples the piston 512 may be coupled directly to the shaft 508 and/or coupled to the shaft 508 via other attachment techniques (e.g., welding, fasteners, etc.).

The piston 512 has a head portion 816 that is sealed against the inner surface 514 of the upper tube 204. In particular, in this example, the piston assembly 510 includes a seal 818 (e.g., an o-ring), which may be referred to as a chamber seal or piston seal, around the head portion 816 to seal against the inner surface 514 of the upper tube 204. As such, the piston 512 divides the chamber 502 of the upper tube 204 into the first chamber 516 (formed above the head portion 816) and the second chamber 518 (formed below the head portion 816). In the illustrated example, the piston 512 defines a central channel 820 (e.g., a bore, a passageway, etc.). The central channel 820 forms a portion of a fluid passageway across the head portion 816 that fluidly connects the first chamber 516 and the second chamber 518, as disclosed in further detail herein. In the illustrated example, the valve 520 is disposed in and/or formed at least partially by the piston 512. The valve 520 is operable between a closed state to block fluid flow across the piston 512 and an open state to allow fluid flow across the piston 512. In the illustrated example, the valve 520 includes a plug 822, which may also be referred to as a poppet in this example. The plug 822 is slidably disposed in the central channel 820. The plug 822 is moveable in a linear direction between a closed position and an open position. In the illustrated example, the plug 822 is aligned with and moveable along the axis 206. In the closed position, which is shown in FIG. 8, the plug 822 blocks fluid flow through the central channel 820 and across the piston 512. As such, fluid is prevented from flowing across the piston 512 between the first and second chambers 516, 518. In the open position, the plug 822 allows fluid flow through the central channel 820 and across the piston 512 between the first and second chambers 516, 518.

In the illustrated example, the seat post 112 includes a cam assembly 824 to transfer or convert rotational motion of the motor 522 to linear movement of the plug 822 for opening or closing the valve 520. In particular, as disclosed above, the plug 822 is movable in a linear direction between the closed and open positions. The valve rod 538 extends through the fitting 812 into the central channel 820 of the piston 512. The valve rod 538 is rotatable by the motor 522. The cam assembly 824 converts the rotational motion of the valve rod 538 (and, thus, the motor 522) to linear movement of the plug 822. The cam assembly 824 includes a unique arrangement of cams and balls disclosed in further detail herein. In this example, the cam assembly 824 is disposed in the piston 512.

As shown in FIG. 8, the piston assembly 510 includes a seal 826 (e.g., a crush washer) between the shaft 508 and a shoulder 828 in the fitting 812. The seal 826 prevents or limits leakage of the fluid between the second chamber 518 and the central channel 820. As disclosed above, the inside of the shaft 508 may be at atmospheric pressure. Therefore the cam assembly 824, which is in the lower portion of the piston 512, may also be at atmospheric pressure with the valve rod 538. As such, in this example, the cam assembly 824 is not within the envelope of the positive or negative chambers. However, in other examples, the cam assembly 824 can be disposed in other locations.

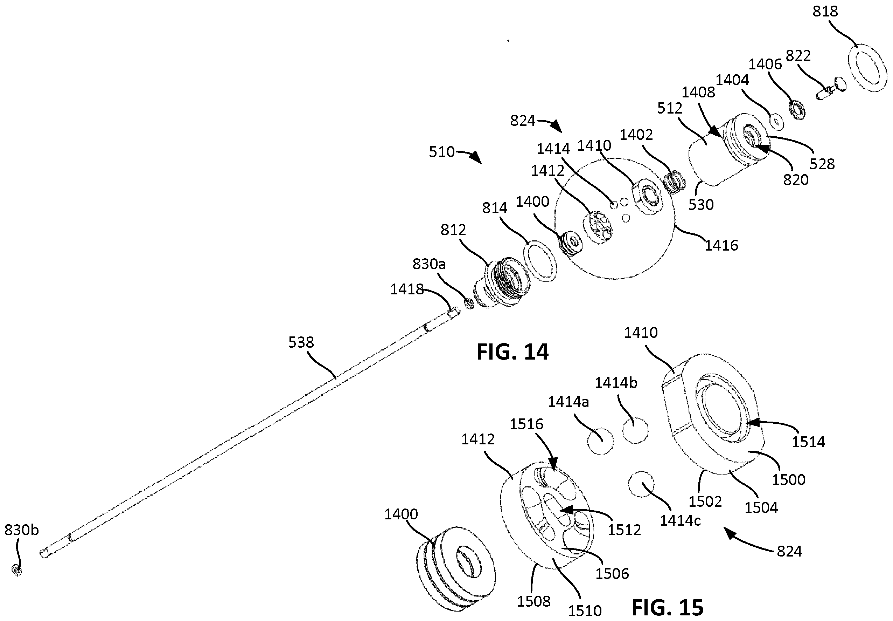

The valve rod 538 extends through and is rotatable in the shaft 508, the fitting 812, and a thrust bearing 1400 (FIG. 14) in the piston 512. The piston assembly 510 includes a first rod bushing 830a and a second rod bushing 830b (FIG. 14) that are disposed around the valve rod 538 and separate the valve rod 538 from the shaft 508 to avoid higher levels of friction. Therefore, the first and second rod bushings 830a, 830b enable the valve rod 538 to rotate smoothly and remain centered in the shaft 508. In some examples the first and second rod bushings 830a, 830b are constructed of low friction material, such as a polymer. In some examples, the valve rod 538 is constructed of aluminum, steel, or a polymer. In other examples, the first and second rod bushings 830a, 830b and/or the valve rod 538 can be constructed of other materials.

In the illustrated example of FIG. 8, the seat post 112 includes a travel spacer 832 in the first chamber 516 in the upper tube 204. The travel spacer 832 is slidable up and down in the upper tube 204. The piston assembly 510 may engage the travel spacer 832 during a compression movement. In some examples, the travel spacer 832 acts as a bottom-out bump. In some examples, the travel spacer 832 is constructed of a compliant material (e.g., rubber). The travel spacer 832 takes up excess volume in the first chamber 516 (the positive chamber) for different travel heights to maintain the desired air spring rate and range of stroke. Different sized travel spacers can be used depending on the desired range of stroke. For example, a taller traveler spacer can be used for reduced stroke length, whereas a shorter travel spacer can be used for increased stroke length.

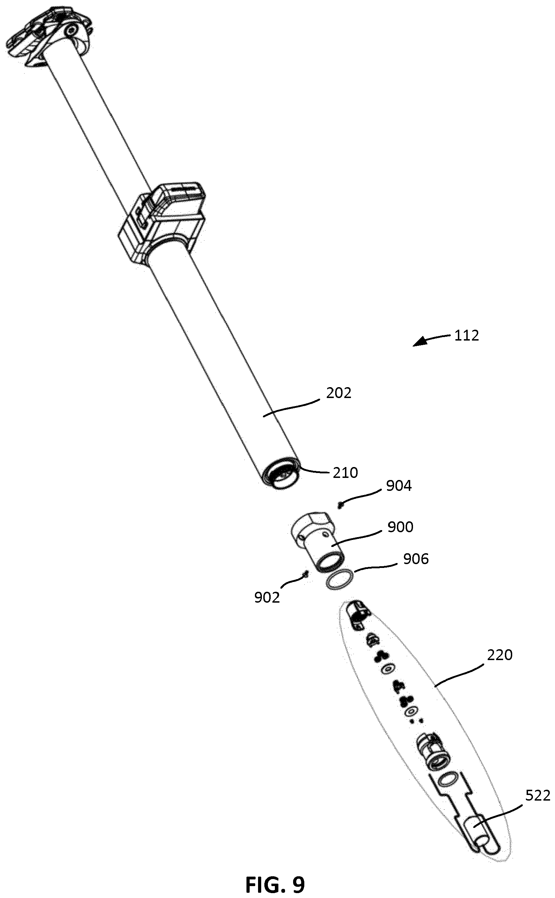

FIG. 9 is an exploded view of the motor assembly 220 and an example motor assembly housing 900 adjacent the lower end 210 of the lower tube 202. When the seat post 112 is assembled, the motor assembly housing 900 is coupled (e.g., threadably coupled) to the lower end 210 of the lower tube 202 and the motor assembly 220 is disposed at least partially in the motor assembly housing 900. In some examples, first and second housing screws 902, 904 are used to couple the motor assembly 220 in the motor assembly housing 900. Also shown in FIG. 9 is a seal 906 (e.g., an o-ring) that can be disposed between the motor assembly 220 and the motor assembly housing 900 to help dampen vibrations from the motor 522.

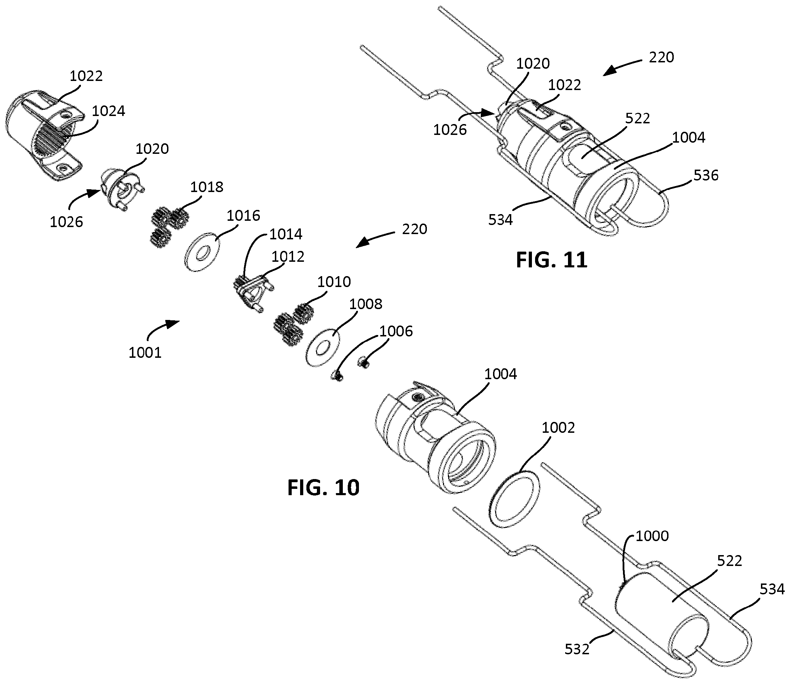

FIG. 10 is an exploded view of the example motor assembly 220. The motor assembly 220 includes a gear reduction system or transmission 1001 to reduce the rotational speed between the motor 522 and an output of the motor assembly 220 that is connected to the valve rod 538 (FIG. 5). In this example, the gear reduction system 1001 is a two-stage planetary gear system. This two-stage planetary gear system creates a relatively high gear ratio between the motor 522 and the output of the motor assembly 220. In the illustrated example, the motor assembly 220 includes the motor 522, a first sun gear 1000 coupled to an output (e.g., a drive shaft) of the motor 522, a motor seal 1002 (e.g., an o-ring), a motor housing 1004, motor screws 1006, a first washer 1008, a first set of planetary gears 1010, a first carrier 1012 with a second sun gear 1014, a second washer 1016, a second set of planetary gears 1018, a second carrier 1020, and a cap 1022 with an internal ring gear 1024. A portion of the first and second wires 532, 534 are also shown in FIG. 10. The first and second wires 532, 534 are electrically connected to the motor 522.

FIG. 11 is an assembled view of the motor assembly 220. As shown in FIG. 11, the motor housing 1004 and the cap 1022 are coupled (e.g., via a snap fit) and form an overall housing structure. The motor 522 and the other parts of the motor assembly 220 are disposed in the housing structure formed by the motor housing 1004 and the cap 1022. The first and second wires 532, 534 extend along the outside of the motor housing 1004 and then curve around the end of the motor housing 1004 and are electrically connected to the motor 522. The second carrier 1020 extends from the cap 1022. When the motor assembly 220 is assembled and installed on the seat post 112 (FIG. 2), the valve rod 538 (FIG. 5) is coupled to the second carrier 1020. In this example, as shown in FIGS. 10 and 11, the second carrier 1020 has a notch or slot 1026. A tab on the valve rod 538 (FIG. 5) extends into the slot 1026, which rotationally couples the second carrier 1020 and the valve rod 538. In other examples, the valve rod 538 and the second carrier 1020 can be coupled via another technique (e.g., a threaded fastener). In other examples, the valve rod 538 and the second carrier 1020 can constructed as a single unitary part (e.g., a monolithic structure). Constructing the valve rod 538 and the second carrier 1020 as a single unitary part helps to keep the valve rod 538 concentric and helps to reduce or avoid frictional losses.

As an example operation, when the motor 522 is activated, the motor 522 rotates the first sun gear 1000. The first sun gear 1000 rotates the first set of planetary gears 1010, which orbit around the first sun gear 1000 via interaction with the ring gear 1024. The first set of planetary gears 1010 rotate the first carrier 1012. The second sun gear 1014 (which is part of the first carrier 1012) rotates the second set of planetary gears 1018, which orbit around the second sun gear 1014 via interaction with the ring gear 1024. The second set of planetary gears 1018 rotate the second carrier 1020, which then rotates the valve rod 538 (FIG. 5). The motor assembly 220 utilizes this two-stage planetary gear system to create a relatively high gear ratio between the motor 522 and the second carrier 1020 (the output of the motor assembly 220). For example, the first planetary gear stage may produce a gear reduction ratio of 5:1 and the second planetary gear stage may also produce a gear reduction ratio of 5:1. As such, the two-stage planetary gear system produces a gear reduction ratio of 25:1 (but in other examples can be higher or lower). This provides a large speed reduction between the motor 522 and the second carrier 1020 and, thus, between the motor 522 and the valve 520 (FIG. 5). This increases torque output to the second carrier 1020 while still enabling the motor 522 to operate at a relatively high speed, which is typically more efficient and stable. In other examples, the motor assembly 220 can utilize a single stage planetary gear system or another type of gear reduction system (e.g., a two-gear system). In still other examples, the motor assembly 220 may not utilize any gear reduction system. Instead, the output of the motor 522 can be coupled directly or indirectly to the valve rod 538 without a gear reduction system.

FIG. 12 is an enlarged view of the callout 540 of FIG. 5 showing a cross-sectional view of the motor assembly 220 installed on the lower tube 202. FIG. 13 is a cross-sectional view of the motor assembly 220 installed on the lower tube 202 and taken along a plane that is perpendicular to the cross-sectional view in FIG. 12. As shown in FIGS. 12 and 13, the seat post 112 includes a body 1200 (e.g., a plug, a seal, a bushing, a grommet) that is disposed partially in the lower tube 202 and extends outward from the lower end 210 of the lower tube 202. The seat post 112 includes retainer rings 1202, 1204 disposed in respective notches formed on the inner surface 536 of the lower tube 202 to secure the body 1200 in the lower tube 202. The shaft 508 extends at least partially into the body 1200. As shown in FIG. 13, the seat post 112 includes the first and second threaded cross-pins 1300, 1302 that are screwed into the respective threaded openings in the body 1200 and extend through the grooves formed in the side of the shaft 508. This prevents the shaft 508 from moving linearly and/or rotating relative to the body 1200. As such, the body 1200 fixedly holds the shaft 508 in the lower tube 202 and thereby couples the shaft 508 to the lower tube 202. In the illustrated example, the seat post 112 includes a plate 1206 and a disc 1208 in the lower tube 202 above the body 1200. The wires 532, 534 extend through openings or notches in the disc 1208, the plate 1206, and the body 1200.

In the illustrated example, the motor assembly housing 900 is threadably coupled to the body 1200 and engaged with the lower end 210 of the lower tube 202. As shown in FIG. 12, the motor assembly housing 900 has openings 1210, 1212. The first and second wires 532, 534 extend through the openings 1210, 1212, extend along an outside of the motor assembly housing 900, wrap around a bottom of the motor assembly housing 900, and extend into the motor assembly 220 to be connected to the motor 522. Therefore, in this example, a portion of the first and second wires 532, 534 are exposed outside of the motor assembly housing 900. However, when the seat post 112 is coupled to the bicycle 100 (FIG. 1), the motor assembly housing 900 is disposed inside of the seat tube 114 (FIG. 1) and, thus, the first and second wires 532, 534 are protected by the frame 102 (FIG. 1) of the bicycle 100. In other examples, the wires 532, 534 can be routed differently such that they are completely shrouded in the motor assembly housing 900. In some examples, the wires 532, 534 are directly connected to the motor 522. In other examples, the wires 532, 534 can be connected to the motor 522 through a quick disconnect between the lower tube 202 and the motor assembly housing 900.

As illustrated in FIGS. 12 and 13, the motor assembly 220 is disposed in the motor assembly housing 900. The seal 906 is disposed between the motor assembly housing 900 and the motor housing 1004 and helps to reduce or dampen vibrations from the motor 522. As shown in FIG. 13, the housing screws 902, 904 extend through the motor assembly housing 900 and into the motor housing 1004 and the cap 1022, which couples the motor assembly 220 to the motor assembly housing 900.

As shown in FIGS. 12 and 13, the motor 522 is disposed in the motor housing 1004. The motor screws 1006 (one of which is referenced in FIG. 12) are used to couple the motor 522 in the motor housing 1004. Further, the motor seal 1002 is disposed between the motor 522 and the motor housing 1004 to help hold the motor 522 in the motor housing 1004.

As shown in FIGS. 12 and 13, the gear reduction system 1001 (i.e., the two-stage planetary gear system) is between the motor 522 and the valve rod 538. The valve rod 538 has a tab 1214 extending into the slot 1026 in the second carrier 1020. As such, the valve rod 538 and the second carrier 1020 are keyed together. Therefore, when the motor 522 is activated, the motor 522 rotates the second carrier 1020 via the two-stage planetary gear system, and the second carrier 1020 rotates the valve rod 538. The motor 522 is a bidirectional motor that can be activated to rotate the valve rod 538 in either direction. In this example, the tab 1214 has a rectangular cross-sectional shape. In other examples, the tab 1214 and the slot 1026 can be shaped differently. In still other examples, the valve rod 538 may be integrally formed with the motor assembly 220 and/or the gear reduction system 1001.

FIG. 14 is an exploded view of the piston assembly 510 and the valve rod 538. Also shown in FIG. 14 are the first and second rod bushings 830a, 830b, which, when assembled, are disposed on the valve rod 538 between the valve rod 538 and the shaft 508 (FIG. 5). In the illustrated example, the piston assembly 510 includes the fitting 812, the fitting seal 814, a thrust bearing 1400, the cam assembly 824, a spring 1402, the piston 512, a poppet seal 1404, a valve seal 1406 (e.g., a seat), the plug 822, and the seal 818. As disclosed above, the piston 512 includes the central channel 820, which extends between the first and second bottom sides 528, 530 of the piston 512. As shown in FIG. 14, the piston 512 also includes one or more radial openings or channels 1408 that extend between an outer surface of the piston 512 and the central channel 820. In this example, the piston 512 includes four radial openings 1408 (one of which is referenced in FIG. 14), which are spaced apart by 90°. In other examples, the piston 512 may include more or fewer radial openings. The radial openings 1408 and a portion of the central channel 820 form a fluid passageway across the piston 512 between the first and second chambers 516, 518 (FIG. 5).

As disclosed above, the cam assembly 824 converts rotational motion of the valve rod 538 (from the motor 522) to linear movement of the plug 822. In this example, the cam assembly 824 includes a first cam 1410, a second cam 1412, and a plurality or set of balls 1414 (e.g., ball bearings) between the first cam 1410 and the second cam 1412. When the piston assembly 510 is assembled, the first cam 1410, the second cam 1412, and the balls 1414 are stacked together and disposed in the piston 512. The first cam 1410 may also be referred to as an upper cam and the second cam 1412 may also be referred to as a lower cam. As disclosed in further detail herein, the second cam 1412 is rotatable in the piston 512, whereas the first cam 1410 remains rotationally constrained in the piston 512. Rotation of the second cam 1412 causes the first cam 1410 to slide axially in the piston 512, which moves the plug 822 to open or close the fluid passageway in the piston 512.

FIG. 15 is enlarged view of the callout 1416 of FIG. 14 showing the thrust bearing 1400 and the cam assembly 824. In this example, the cam assembly 824 include three balls labeled 1414a-1414c. However, in other examples, the cam assembly 824 can include more or fewer balls (e.g., one, two, four, five, etc.). In the illustrated example, the first and second cams 1410, 1412 are disc-shaped. The first cam 1410 has a first side 1500, a second side 1502 opposite the first side 1500, and an outer peripheral edge 1504. Similarly, the second cam 1412 has a first side 1506, a second side 1508 opposite the first side 1506, and an outer peripheral edge 1510. When the cam assembly 824 is assembled, the first side 1506 of the second cam 1412 faces the second side 1502 of the first am 1410. The first and second sides of the cams 1410, 1412 may also be referred to as faces. In other examples, the first and second cams 1410, 1412 can be shaped differently.

As shown in FIG. 15, the first side 1500 of the first cam 1410 has a circular recess 1514. When the piston assembly 510 is assembled, a portion of the spring 1402 is disposed the circular recess 1514. This helps maintain the spring 1402 in a central position in the piston 512 and engaged with the first cam 1410.

In the illustrated example of FIG. 15, the second cam 1412 has an opening 1512 (e.g., a key slot) extending between the first and second sides 1506, 1508. The opening 1512 is sized and shaped to receive an end 1418 (FIG. 14) of the valve rod 538 (FIG. 14). As such, the valve rod 538 and the second cam 1412 are keyed together. Therefore, rotation of the valve rod 538 causes rotation of the second cam 1412, and vice versa.

In the illustrated example, the first side 1506 of the second cam 1412 has three recesses 1516 (one of which is referenced in FIG. 15). The second side 1502 of the first cam 1410 has matching recesses, shown in further detail herein. Each of the recesses 1516 has a ramped profile or surface with a deeper portion or section and a shallower portion or section. As disclosed in further detail herein, the balls 1414a-1414c are disposed in respective ones of the recesses in the first and second cams 1410, 1412. When the second cam 1412 is rotated, the balls 1414a-1414c move between the shallower and deeper potions of the recesses, which moves the first cam 1410 linearly toward or away from the second cam 1412. This linear movement causes the plug 822 (FIG. 14) to move linearly, thereby opening or closing the valve 520.

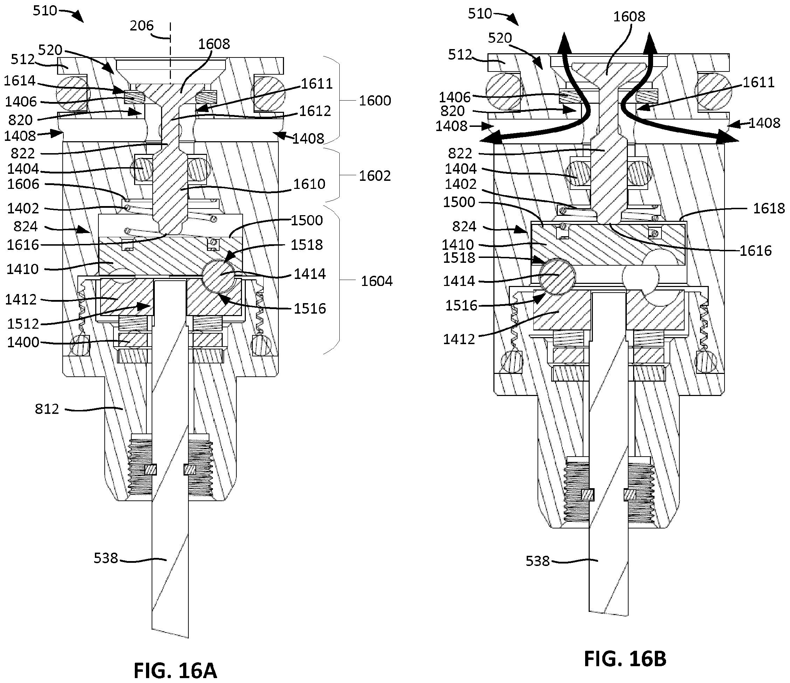

FIGS. 16A and 16B are cross-sectional views of the piston assembly 510 and the valve rod 538. FIG. 16A shows the valve 520 of the piston assembly 510 in a closed state, and FIG. 16B shows the valve 520 of the piston assembly 510 in an open state. Referring to FIG. 16A, the central channel 820 of the piston 512 has an upper portion 1600, a middle portion 1602, and a lower portion 1604. The first cam 1410, the balls 1414 (one of which is shown in FIG. 16A), the second cam 1412, and the thrust bearing 1400 are stacked together and disposed in the lower portion 1604 of the central channel 820. The components are clamped or disposed between the piston 512 and the fitting 812. As shown in FIG. 16A, the first and second cams 1410, 1412 are axially aligned with the plug 822 along the axis 206. The spring 1402 is disposed between a shoulder 1606 of the piston 512 and the first cam 1410. As such, the spring 1402 biases the first cam 1410 toward the second cam 1412 (downward in FIG. 16A). The first cam 1410 is slidable up-and-down in the piston 512, but is rotationally locked or constrained. The valve rod 538 extends into the opening 1512 in the second cam 1412. The valve rod 538 and the second cam 1412 are rotationally constrained. The second cam 1412 is rotatable in the piston 512 and, thus, rotatable relative to the first cam 1410. The second cam 1412 is also axially unconstrained, but generally remains in the same axial location. The thrust bearing 1400 is sandwiched between the second cam 1412 and the fitting 812. The thrust bearing 1400 reduces rotational friction of the second cam 1412 while under preload force. In some examples, the thrust bearing 1400 is a ball bearing. In other examples, other types of bearings and/or features can be used such as a roller thrust bearing, a thrust washer, a low friction washer, or low friction surfaces and treatments.

As shown in FIG. 16A, the plug 822 is disposed in the central channel 820 of the piston 512. The plug 822 has a first sealing portion 1608 (e.g., a head), a second sealing portion 1610, and a shaft 1612 between the first and second sealing portions 1608, 1610. The plug 822 is moveable (e.g., slidable) up and down (linearly) in the central channel 820 between a closed position (shown in FIG. 16A) and an open position (shown in FIG. 16B). As shown in FIG. 16A, the poppet seal 1404 is disposed in the middle portion 1602 of the central channel 820 and is sealed against the second sealing portion 1610 of the plug 822. The poppet seal 1404 fluidly separates the upper portion 1600 of the central channel 820 and the lower portion 1604 of the central channel 820. The upper portion 1600 is filled with fluid from the first and second chambers 516, 518 (the positive and negative pneumatic chambers), while the lower portion 1604 may be filled with atmospheric air from the shaft 508 (FIG. 5).

As shown in FIG. 16A, the radial openings 1408 intersect the upper portion 1600 of the central channel 820. The upper portion 1600 of the central channel 820 above the plug 822 is exposed to fluid in the first chamber 516 (FIG. 5), and the radial openings 1408 are exposed to the fluid in the second chamber 518 (FIG. 5). Therefore, the piston 512 defines a fluid passageway 1611 between the first chamber 516 and the second chamber 518. In particular, the fluid passageway 1611 is formed by the upper portion 1600 of the central channel 820 and the radial openings 1408. The plug 822 is at least partially disposed in the fluid passageway 1611. The plug 822 is moveable in a linear direction between the open position to enable fluid flow through the fluid passageway 1611 and a closed position to block fluid flow through the fluid passageway 1611.

As shown in FIG. 16A, the valve seal 1406 is disposed in a gland 1614 in the upper portion 1600 of the central channel 820. When the plug 822 is in the closed position, as shown in FIG. 16A, the first sealing portion 1608 of the plug 822 is sealingly engaged with the valve seal 1406. This blocks or prevents fluid from flowing through the fluid passageway 1611 and, thus, between the first and second chamber 516, 518. In some examples, the plug 822 is constructed of a metal (e.g., stainless steel with a high surface finish) and/or a plastic polymer and the poppet and valve seals 1404, 1406 are constructed of rubber and/or a plastic polymer. In other examples, the plug 822 and/or the poppet and valve seals 1404, 1406 can be constructed of other materials.

As shown in FIG. 16A, a bottom end 1616 of the plug 822 is disposed in the lower portion 1604 of the central channel 820 and above the first cam 1410. In some examples, when the plug 822 is in the closed position, the bottom end 1616 of the plug 822 is spaced from the first side 1500 of the first cam 1410. For example, the bottom end 1616 may be spaced from the first cam 1410 by 0.2 millimeters (mm). In other examples, the bottom end 1616 of the plug 822 is engaged with the first side 1500 of the first cam 1410.

To move the plug 822 upward to the open position to open the valve 520, the motor 522 (FIG. 5) is activated to rotate the second cam 1412 (via the valve rod 538) in a first direction. The second cam 1412 rotates relative to the first cam 1410. In the position shown in FIG. 16A, the balls 1414 are disposed in the deeper portions of the recesses 1516 (one of which is reference in FIG. 16A) in the second cam 1412 and recesses 1518 (one of which is referenced in FIG. 16A) in the first cam 1410. As the second cam 1412 rotates, the interaction between the rotation of the second cam 1412 and the balls 1414 causes the balls 1414 to roll along the recesses 1516, 1518 to the shallower portions of the recesses 1516, 1518. For example, as shown in FIG. 16B, the balls 1414 (one of which is referenced in FIG. 16B) have rolled to the shallower portions of the recesses 1516, 1518 (one of which is referenced in FIG. 16B), such that the balls 1414 push the first cam 1410 upward, away from the second cam 1412. As the first cam 1410 moves upward, the first cam 1410 compresses the spring 1402. Further, the first side 1500 of the first cam 1410 engages the bottom end 1616 of the plug 822 and then pushes the plug 822 upward. As such, the first sealing portion 1608 of the plug 822 is moved away from the valve seal 1406. As shown in FIG. 16B, this creates a flow path (shown by the arrows) for fluid to flow through the upper portion 1600 of the central channel 820 and the radial openings 1408. Therefore, fluid can flow freely through the fluid passageway 611 of the piston 512 between the first and second chambers 516, 518 (FIG. 5). This enables the seat post 112 to expand or contract, as disclosed above. Fluid can flow in either direction depending on whether the seat post 112 is being contracted or expanded.

To close the valve 520, the motor 522 (FIG. 5) can be activated to rotate the second cam 1412 in a second direction, opposite the first direction used to open the valve 520. This causes the balls 1414 to roll back to the deeper portions of the recesses 1516, 1518 to the position shown in FIG. 16A. The spring 1402 biases the first cam 1410 downward and into engagement with the balls 1414. The second cam 1410 moves downward away from the bottom end 1616 of the plug 822, which enables the plug 822 to move downward to the closed position shown in FIG. 16A, thereby closing the valve 520. Therefore, rotation of the second cam 1412 in a first direction causes the first cam 1410 to move toward the plug 822 to move the plug 822 to the open position, whereas rotation of the second cam 1412 in a second direction enables the first cam 1410 to move away from the plug 822 to enable the plug 822 to move to the closed position. As such, the cam assembly 824 converts or transforms rotational motion of the motor 522 to linear movement of the plug 822 for opening and closing the valve 520. As can be appreciated, in this example, the valve 520 is a type of volume displacing valve because a small volume is changed in the first and second chambers 516, 518 when the plug 822 is moved between the open and closed positions. However, in other examples, other types of valves can be implemented.

As shown in FIGS. 16A and 16B, the piston assembly 510 does not include a spring or other mechanical means for biasing the plug 822 downward toward the closed position. Instead, the pressure differential acting across the first and second sealing portions 1608, 1610 biases the plug 822 downward and into the valve seal 1406, thereby automatically closing the valve 520. Therefore, the pressure differential on the plug 822 and the bias of the spring 1402 help move or push the first cam 1410 back down to the lower position shown in FIG. 16A when the second cam 1412 is rotated in the second direction. Further, when the plug 822 is in the closed position (FIG. 16A), the plug 822 is biased into the valve seal 1406 by the pressure differential across the plug 822 and thereby holds the plug 822 in the closed position. For example, the poppet seal 1404 may be a first diameter, such as 3mm, while the valve seal 1406 may be a second diameter, such as 4.5 mm, that is larger than the first diameter of the poppet seal 1404. The poppet seal 1404 separates the second chamber 518 (the negative chamber) from the atmospheric pressure, while the valve seal 1406 (in the closed state) separates the positive and negative pressures in the first and second chambers 516, 518 (FIG. 5). This creates a higher downward bias force to hold the plug 822 downward and sealed against the valve seal 1406 when it is in the closed position than when it is in the open position. However, when the valve 520 is open, the effective pressure area drops from 4.5mm to 3mm, so there is a reduced downward bias force on the plug 822. In other examples, the plug 822 can include additional or fewer portions and/or different diameters. In some examples, the piston assembly 510 may include a spring or other mechanical means to assist in moving the plug 822 toward the closed position.

As disclosed above, the first cam 1410 is moveable up-and-down to move the plug 822. In some examples, the first cam 1410 moves a total distance of about 1.7 millimeters (mm) between the open and closed positions. In other examples, the first cam 1410 can be moveable a larger or smaller distance. In some examples, the distance is limited by the distance between the first cam 1410 and a shoulder 1618 (FIG. 16B) formed in the piston 512.

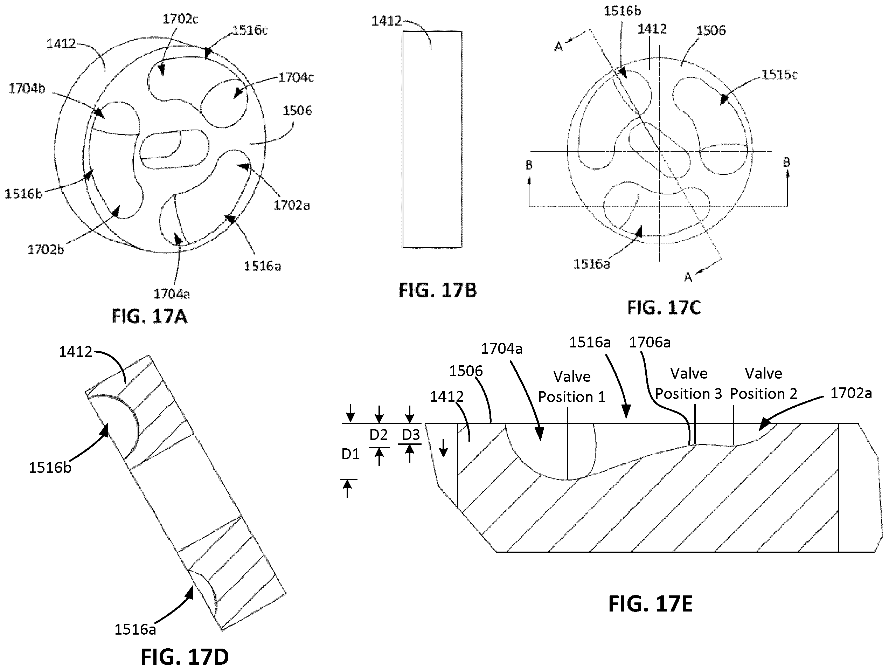

FIG. 17A-17E show various views of the second cam 1412. FIG. 17A is a perspective view of the first side 1506 of the second cam 1412. In this example, the second cam 1412 has three recesses, labeled as 1516a, 1516b, 1516c, formed in the first side 1506 of the second cam 1412. The recesses 1516a-1516c can also be referred to as cam surfaces or ramps. The recesses 1516a-1516c are spaced equidistant from each other. Each of the recesses 1516a-1516c has the same profile, including a deep portion and a shallow portion. For example, as shown in FIG. 17A, the first recess 1516a has a first portion, referred to herein as a shallow portion 1702a, at one end of the first recess 1516a and a second portion, referred to as a deep portion 1704a, at the opposite end of the first recess 1516a. The deep portion 1704a extends further into the first side 1506 than the shallow portion 1702a. The second and third recesses 1516b, 1516c similarly include shallow and deep portions 1702b, 1702c, 1704b, 1704c, respectively. These profiles enable the balls 1414 (FIG. 14) to move the first cam 1410 in a linear direction. FIG. 17B is a side view of the second cam 1412. In this example, the second cam 1410 has a substantially constant thickness.

FIG. 17C is a face view of the first side 1506 of the second cam 1412 showing the three recesses 1516a-1516c. FIG. 17D is a cross-sectional view of the second cam 1412 taken along line A-A of FIG. 17C. The recesses 1516a-1516c have an effective diameter (e.g., 3.2mm) that is slightly larger than the diameter of the balls 1414 (e.g., 3mm) to ensure the balls 1414. This helps ensure the balls 1414 remain in the respective recesses 1516a-1516c.

FIG. 17E is a cross-sectional view of the second cam 1412 taken along line B-B showing the first recess 1516a. As shown, the first recess 1516a has the shallow portion 1702a and the deep portion 1704a. The deep portion 1704a extends further into the first side 1506 than the shallow portion 1702a. For example, the deep portion 1704a has a first depth D1 and the shallow portion 1702a has a second depth D2 that is less than the first depth D1. The deep portion 1704a corresponds to a Valve Position 1, which corresponds to the closed state of the valve 520 (FIG. 5), and the shallow portion 1702a corresponds to a Valve Position 2, which corresponds to the open state of the valve 520. For example, when the first ball 1414a (FIG. 15) is disposed in the deep portion 1704a of the first recess 1516a, the first ball 1414a extends further into the first side 1506 of the second cam 1412. This enables the first cam 1410 (FIG. 14) to remain closer to the second cam 1412 and, thus, the plug 822 is in the closed position (FIG. 16A). When the second cam 1412 is rotated, the first ball 1414a is rolled into the shallow portion 1702, which also moves a larger portion of the first ball 1414a outward from the first side 1506 of the second cam 1412. This pushes the first cam 1410 away from the second cam 1412, thereby moving the plug 822 to the open position (FIG. 17B).

As shown in FIG. 17E, the first recess 1516a also has a hump 1706a between the shallow and deep portions 1702a, 1704a. The hump 1706a corresponds to a Valve Position 3 between Valve Position 1 and Valve Position 2. The hump 1706a is less deep than the shallow and deep portions 1702a, 1704a. For example, the hump 1706a has a third depth D3 that is less than the first depth D1 and the second depth D2. As such, the first recess 1516a is sloped or ramped between the hump 1706a and the shallow and deep portions 1702a, 1704a. This enables the pressure and spring force to bias the first ball 1414a (FIG. 15) toward one of Valve Position 1 (closed) or Valve Position 2 (open). For example, as the first ball 1414a rolls over the hump 1706a, the first ball 1414a naturally falls into one of the shallow or deep portions 1702a, 1704a, which move and maintain the first cam 1410 in the Valve Position 1 (closed) or Valve Position 2 (open). In some examples, the maximum depth at Valve Position 1 and is less than half the diameter of the first ball 1414a so as to prevent the first side 1506 (the upper surface) of the second cam 1412 from contacting the second side 1502 (the lower surface) of the first cam 1410. Valve Position 1 and Valve Position 2 are of sufficient depth to act as a ball bearing stops at the ends of the first recess 1516a. Valve position 3 is of sufficient depth to keep the first ball 1414a radially guided within the center of the first recess 1516a. The second and third recesses 1516b, 1516c have the same ramp profiles as the first recess 1516a shown in FIG. 17E.

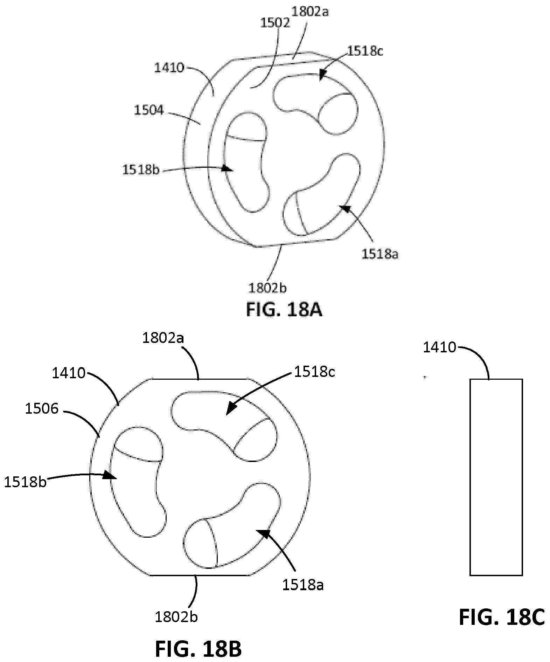

FIGS. 18A-18C are different views of the first cam 1410. To prevent the first cam 1410 from rotating within the piston 512 (FIG. 5), the first cam 1410 includes an anti-rotation feature that engages with a corresponding anti-rotation feature of the piston 512. For example, as shown in FIGS. 18A and 18B, the peripheral edge 1504 of the first cam 1410 has flattened surfaces 1802a, 1802b. The flattened surfaces 1802a, 1802b engage corresponding flattened surfaces in the central channel 820 of the piston 512. This prevents the first cam 1410 from rotating in the piston 512. As such, the first cam 1410 and the piston 512 are keyed together. This prevents rotation of first cam 1410, but still allows the first cam 1410 to move (e.g., slide) linearly in the piston 512. In other examples, the first cam 1410 and/or the piston 512 can include other shaped anti-rotational or key features (e.g., splines, protrusions and notches, etc.).

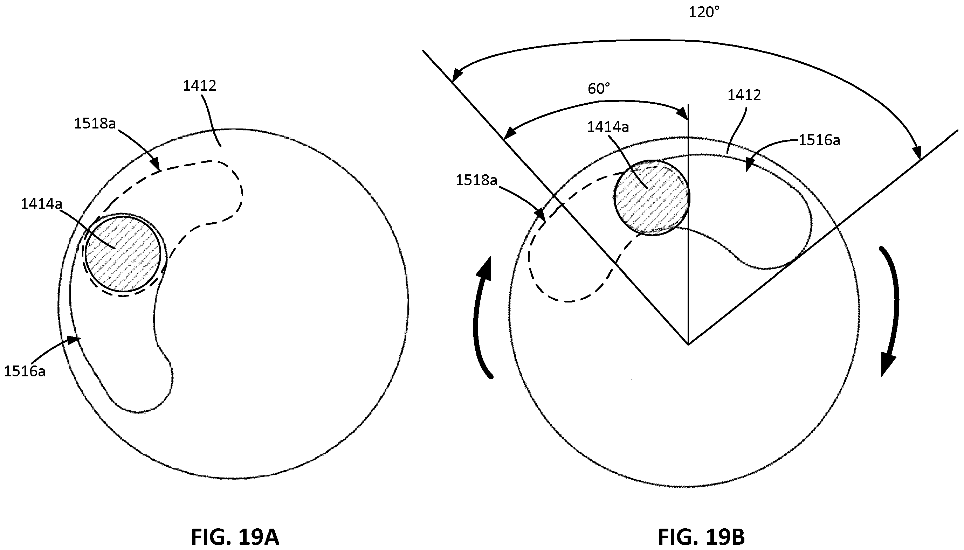

The first cam 1410 has the same pattern of recesses as the second cam 1412. As shown in FIGS. 18A and 18B, the first cam 1410 has three recesses, labeled 1518a-1518c, extending into the second side 1502 of the first cam 1410. The recesses 1518a-1518c have the same profile as the recesses 1516a-1516c of the second cam 1412 shown in FIG. 17E. When the first and second cams 1410, 1412 are assembled in the piston 512 (FIG. 5), a portion of each of the recesses 1516a-1516c is axially aligned with the respective recesses 1518a-1518c. For example, FIG. 19A shows a top view of the second cam 1412 with the first recess 1516a, and the first recess 1518a of the first cam 1410 (not shown) is shown in dashed lines. The other recesses are not shown. As shown in FIG. 19A, the deep portions of the first recesses 1516a, 1518a are axially aligned. In FIG. 19A, the first ball 1414a is partially disposed in the deep portions of the first recesses 1516a, 1518a. This position corresponds to the closed position of the valve 520. In FIG. 19B, the second cam 1412 has been rotated clockwise. As such, the first recess 1516a of the second cam 1412 has rotated clockwise relative to the first recess 1518a of the first cam 1410. This causes the first ball 1414a to roll into the shallow portions of the first recesses 1516a, 1518a. As shown in FIG. 19B, the shallow portions of the first recesses 1516a, 1518a are now axially aligned. This position corresponds to the open position of the valve 520. As disclosed above, this movement causes the first cam 1410 to be pushed axially upward in the piston 512 to open the valve 520. To close the valve 520, the second cam 1412 is rotated in the reverse direction, which causes the first ball 1414a to roll back to the deep portion of the first recesses 1516a, 1518a. This enables the first cam 1410 to move linearly toward the second cam 1412. The second and third balls 1414b, 1414c are similarly arranged within the second and third recesses 1516b, 1516c, 1518b, 1518c, respectively. Therefore, when the second cam 1412 is rotated in the first direction, the balls 1414a-1414c are rolled from the deep portions of the recesses 1516a-1516c, 1518a-1518c to the shallow portions of the recesses 1516a-1516c, 1518a-1518c to move the first cam 1410 in a linear direction away from the second cam 1412, and, when the second cam 1412 is rotated in the second direction, the balls 1414a-1414c are rolled from the shallow portions of the recesses 1516a-1516c, 1518a-1518c to the deep portions of the recesses 1516a-1516c, 1518a-1518c to enable the first cam 1410 to move in a linear direction toward the second cam 1412. In some examples, the balls 1414a-1414 only rotate and do not slide when moving along the recesses. This rolling action of the balls 1414a-1414c results in little or no friction losses when compared to lead screw types of designs.

When the second cam 1412 is rotated relative to the first cam 1410, the second cam 1412 rotates about the center axis at the same rate as the valve rod 538, but the ball bearings roll along the cams 1410, 1412 with an orbit rate about the center axis of half the rate of the valve rod 538. This is because the total rotation angle of the second cam 1412 relative to the first cam 1410 is twice the rotation angle of the movement of the balls. For example, as shown in FIG. 19B, the second cam 1412 has rotated about 120° from the position shown in FIG. 19A, but the first ball 1414 has only moved about 60° from the position shown in FIG. 19A. However, in other examples, the cams 1410, 1412 and the recesses can be designed to rotate different amounts.

In some examples, the first and second cams 1410, 1412 are constructed of a polymer such as Delrin or nylon, a metal such as aluminum or steel, and/or a ceramic such as alumina. In other examples the first and second cams 1410, 1412 can be constructed of other materials. In some examples, the balls 1414 are constructed of hardened steel. In other examples, the balls 1414 can be constructed of other materials.

In some examples, using three balls 1414 helps ensure the first cam 1410 remains parallel to the second cam 1412 throughout the cam travel. However, in other examples, more or fewer balls can be used. For example, the cams 1410, 1412 may each have one recess, two recesses, or more than three recesses. As such, any number of recesses and balls can be implemented. In some examples, the profiles of the recesses 1518a-1518c on the first cam 1410 may be different than the recesses 1516a-1516c on the second cam 1412 to achieve other types of movements. In some examples, the recesses are formed only in one of the cams 1410, 1412. For example, the second cam 1412 may have the three recesses 1516a-1516c, while the first cam 1410 may not have any recess. Instead, the balls 1414a-1414c may spin on the flat surface of the second side 1502. In some examples, the second side 1502 may have three hemispherical recesses to hold the balls 1414a-1414c relative to the first cam 1410, but the balls 1414a-1414c do not translate relative to the first cam 1410. Further, while in this example the second cam 1412 rotates and the first cam 1410 moves linearly (but does not rotate), in other examples, the first cam 1410 may rotate and move linearly. For example, the second cam 1412 may be held in a fixed position in the piston 512. The valve rod 538 may extend through the second cam 1412 and may be coupled to the first cam 1410. The valve rod 538 may rotate the first cam 1410. This rotation causes the first cam 1410 to slide linearly along the valve rod 538 in the piston. Therefore, only one of the cams may rotate and translate, while the other cam remains fixed.

As disclosed above, the motor 522 (FIG. 5) is controlled by the processor circuitry 408 (FIG. 4) of the control module 222 (FIG. 2). The control module 222 can activate the motor 522 to rotate the second cam 1412 between Valve position 1 and Valve position 2 to open and close the valve 520. For example, when a rider presses the seat post actuation button 113 (FIG. 1) on the handlebars 118 (FIG. 1), the processor circuitry 408 activates the motor 522 to rotate the second cam 1412 to cause the plug 822 to move to the open position (FIG. 16B). When the second cam 1412 reaches the Valve Position 2, the motor 522 can be deactivated and the valve 520 remains in the open state. In particular, the valve 520 remains in the open state because of the latching function caused by the balls 1414a-1414c in the shallow portions of the recesses. While the valve 520 is open, the seat post 112 can be expanded and/or contracted to change the height of the seat 110. In some examples, the motor 522 rotates in a closing direction with a positive voltage and in an opening direction with a negative voltage, or vice versa. When the rider releases the seat post actuation button 113, the processor circuitry 408 applies an opposite voltage to the motor 522 and the motor 522 draws the current it needs to begin moving the second cam 1412 to the Valve Position 1, which closes the valve 520. The cycle is complete with the valve 520 in the closed state. Therefore, when the rider presses the seat post actuation button 113, the motor 522 is activated to open the valve 520 and then deactivated (while the valve 520 remains in the open state), and when the rider releases the seat post actuation button 113, the motor 522 is activated to close the valve 520 and then deactivated (while the valve 520 remains in the closed state). The example cam assembly 824 enables the valve 520 to be self-latching. In other words, once the valve 520 is in the open or closed state, the motor 522 can be deactivated and the valve 520 remains in the same state. As such, power is not required to stay in one state or the other. This helps preserve battery life, because battery power is only used to open and close the valve 520.

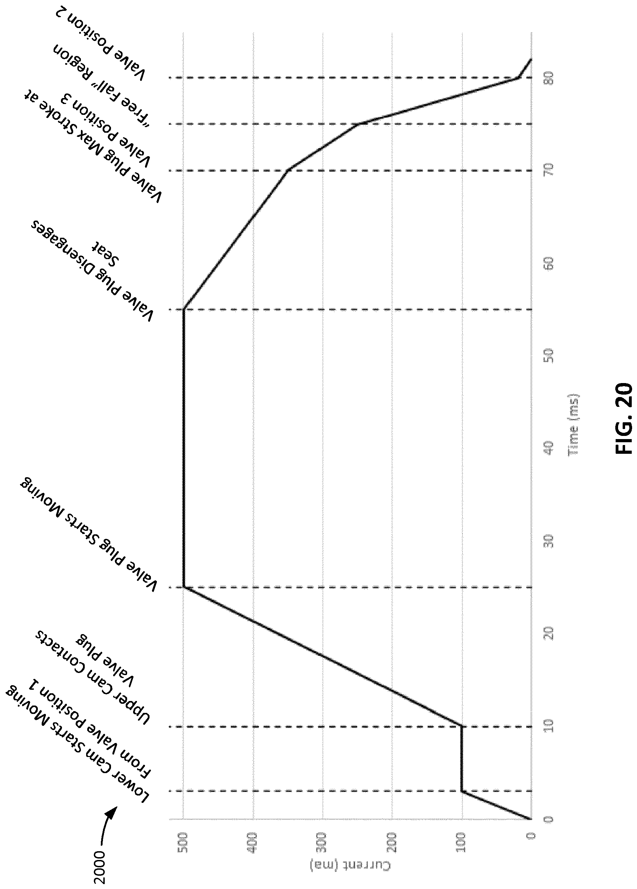

In some examples, the motor assembly 220 (FIG. 2) does not use a positional encoder. Instead, the processor circuitry 408 can use the motor current draw to determine when the valve 520 is in the open or closed states. In some examples, the processor circuitry 408 can determine when to deactivate the motor 522 based on a sensed change (e.g., a decrease) in current to the motor 522, examples of which are disclosed in further detail in connection with FIGS. 20-23. This reduces complexity and costs compared to known seat post motor systems. However, in other examples, a positional encoder or position sensor may be used to determine when to stop the motor 522 at the open and closed positions.

FIG. 20 is an example graph 2000 of electrical current (in mA) versus time (in milliseconds (ms)) showing an example current profile as output by the example control module 222 to the motor 522 when opening the valve 520. During the 0-3ms region, current is building up to begin rotating the valve rod 538. During the 3-10ms region, the second cam 1412 (the lower cam) begins to rotate. This causes the first cam 1410 (the upper cam) to move upward against the bias of the spring 1402 and takes up any part fit gaps (e.g., the gap between the first cam 1410 and the bottom end 1616 of the plug 822, slop between the valve rod 538 and the second cam 1412, etc.) until the first cam 1410 engages the bottom end 1616 of the plug 822 (at time 10ms). In some examples, clearances between these parts may be 0.1mm-0.5mm, but can be larger or smaller in other examples. During the 10-25ms region, the motor 522 draws current and continues rotating the second cam 1410 and applying upward force on the plug 822. During the 25-55ms region, the first cam 1410 must overcome the bias of the spring 1402 plus the pressure bias force against the valve seal 1406 (e.g., having a diameter of 4.5mm). At 55ms, the plug 822 disengages the valve seal 1406 to open the valve 520, which enables fluid to flow across the piston 512 and between the first and second chambers 516, 518. The current begins to drop at 55ms as the pressure force bias decreases on the now acting seal at the poppet seal 1404 (e.g., having a diameter 3mm). At 70ms, the balls 1414a-1414c are located at the humps of each of the recesses, and the plug 822 is at its maximum displacement. After 70 ms, the balls 1414a-1414c enter a free fall region where the plug 822 begins to move in the direction of the pressure force bias. The motor current begins to drop at a faster rate at which point the control module 222 senses this current drop and begins to taper off the current to the motor 522 at a faster rate. The taper rate may be tuned to be faster or slower to save electricity and/or maintain some motor current to minimize a bounce back as the balls 1414a-1414a move to the shallow portions (Valve Position 2) of the recesses . As the balls 1414a-1414c settle into the shallow portions of the recesses 1516a-1516c, 1518a-1518c, the current goes to zero. Here, the taper rate may transition (in a concave shape) up to zero current for a soft stop. The pressure bias on the plug 822 latches the cams 1410, 1412 in Valve Position 2 with no electricity required while the rider varies the height of the seat post 112. In other examples, other motor current profiles can be implemented where the current ramps up after the balls 1414a-1414c settle into Valve Position 2. The current is then tapered down from a predetermined current value greater than the lowest current value at Valve Position 2. In other examples, other current profiles can be implemented by the control module 222 to open the valve 520.

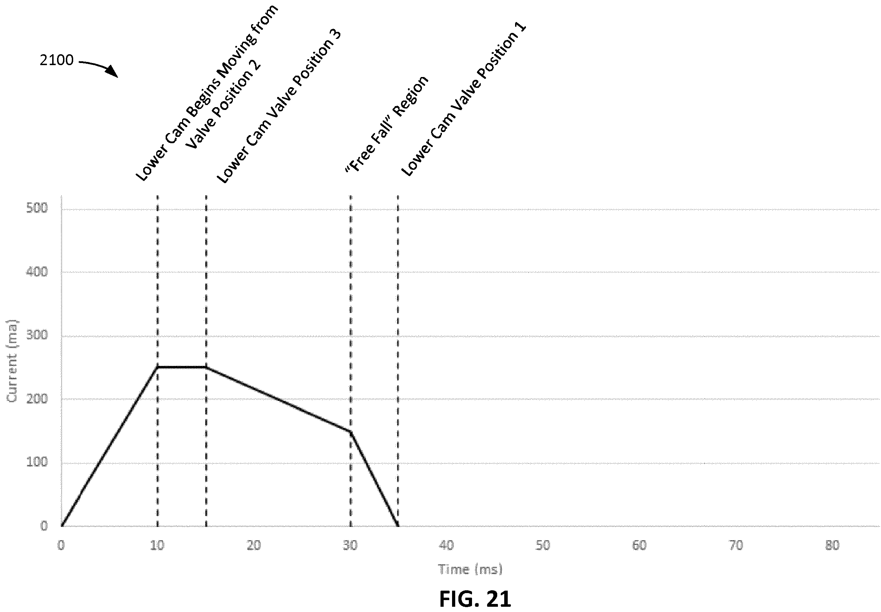

FIG. 21 is an example graph 2100 showing electrical current (in mA) versus time (in milliseconds (ms)) as output by the control module 222 for closing the valve 520. When the valve 520 is in the open state, the first cam 1410 (the upper cam) is in contact with the plug 822. During the 0-10ms region, the current ramps up to begin moving the second cam 1412 (the lower cam) against the cam spring bias and pressure bias to move the balls 14141a-14141c from Valve Position 2 to Valve Position 3. Once Valve Position 3 is overcome, the pressure bias against the plug 822 begins to move the plug 822 in the direction of the pressure bias force as the balls 1414a-14141c move down the ramp into free fall with the motor current beginning to drop. The control module 222 senses the free fall region and reduces or tapers to zero current as the second cam 1412 returns to Valve Position 1. This reduces electrical energy consumption over prior art stall current cutoff methods. No current is then required to hold the valve 520 fully closed and the seat post ride height is fixed for the rider. The valve closed-open-closed cycle initiated by the rider for a height adjustment is complete. In some examples, the time duration and energy usage in valve closing cycle is less than what is required for a valve opening cycle. Alternatively, the cam ramps, pressure bias, poppet geometry, and/or current profile can be configured for the valve closing cycle to use more time and/or energy than the valve opening cycle. The cam ramp profile can be tuned and/or the current can be controlled according to different profiles for improved battery life, desired speed of opening and closing, reducing motor start up and motor stop loads, overcoming sticky seal disengagement, and/or add redundant current cutoff triggers. Further, as an alternative to or to be used in conjunction with current tapering, motor soft braking may be used to hold position, reduce start/stop loads, reduce bounce, and/or improve battery life back by momentarily shorting the positive and negative motor wire leads through the control module 222.

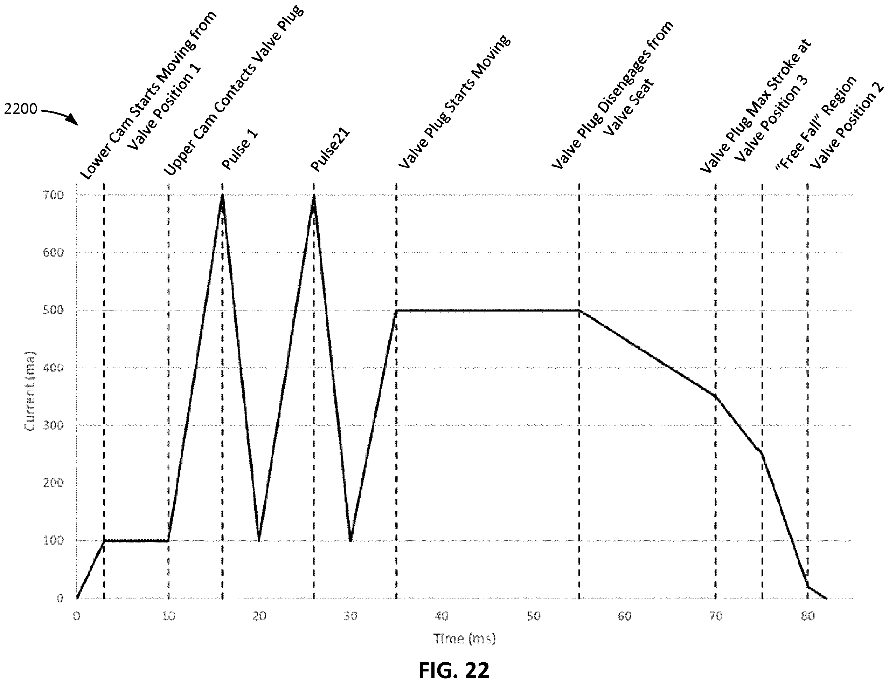

In some instances, such as after an extended period of non-use, the plug 822 may become partially stuck to the poppet seal 1404 and/or the valve seal 1406. This high friction event can be detected by the control module 222 based on a maximum current value and/or steepens of the slope of the motor current vs time. In some examples, the control module 222 is configured to perform a certain pulsating current profile to help dislodge the plug 822. For example, FIG. 22 shows an example graph 2200 showing electrical current (in mA) versus time (in milliseconds (ms)) during a high friction event when opening the valve 520. Between 10-15ms, the control module 222 senses a current or slope at or above a predetermined value. The control module 222 applies a pulse current after 10-20ms, pauses, then allows the motor 522 to draw current again in a pulsing fashion. In some examples, this pulsing cycle is repeated 5 times or more to overcome the high seal friction to get the valve 520 to the open state. When the plug 822 does overcome friction and starts to move, the motor current draw reaches a maximum value lower than the pulse maximum current for a time duration as the plug 822 disengages the valve seal 1406. The control module 222 detects this time duration and ceases the pulsing events. In some examples, the control module 222 may automatically perform the pulsing cycle during all opening cycles. In other examples, the control module 222 may perform the pulsing cycle only after the system is powered down and powered back up (e.g., from a battery change or charge) and/or or if a predetermined amount of time has passed since the last actuation.

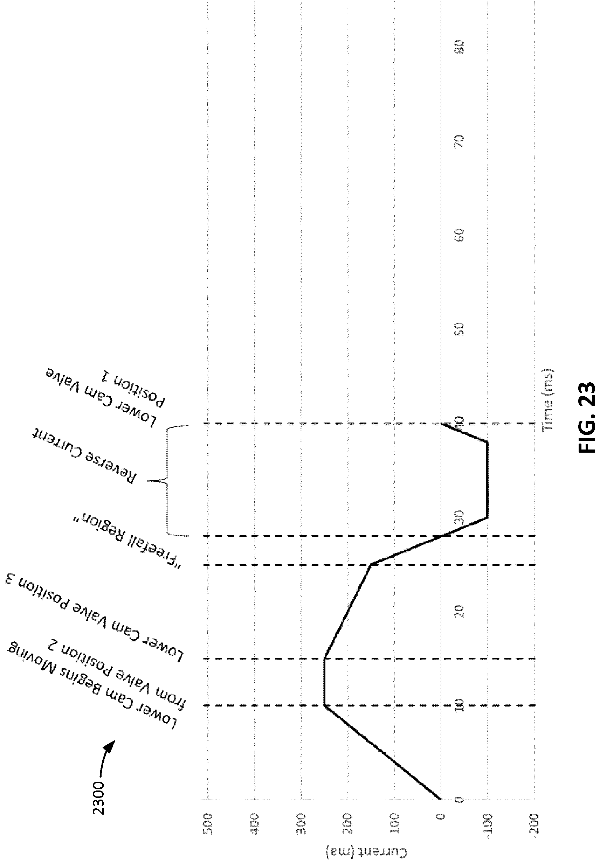

In some instances, due to the low friction of the cam assembly 824 and the plug pressure bias, the free fall of the balls 1414a-14141c can accelerate and begin to drive the motor 522 at a higher rpm during a closing operation. This can result in a reverse in voltage and current against the motor 522. In other words, the motor 522 becomes a generator that outputs energy, which can be harvested and stored in the battery 404. For example, FIG. 23 is an example graph 2300 of a current profile during a closing operations. As shown in FIG. 23, the current reverses back into the motor 522 from a freefall event. The reverse current happens until Valve Position 1 is reached. The area below the x-axis and above the current trace represents the energy that can be harvested back into the battery 404. Additionally or alternatively, this energy may be stored in a capacitor and/or used to perform other functions. Some or all of this energy may be stored and/or used in improving the system efficiency or for performing other functions.

In other examples, the recesses can have other geometries. The recesses can have several ramp profile changes or detents, and/or linear, concave up, and/or concave down profiles to achieve desired performance. As disclosed above, Valve Position 1 and Valve Position 2 are latching positions and, thus, require no energy to hold in these positions. In other examples, the recess profiles can be configured to have three or more detents or latch positions.

While in the example of FIGS. 2-16B the motor assembly 220 (including the motor 522) is coupled to and/or otherwise disposed on the lower end 210 of the lower tube 202, in other examples, the motor assembly 220 (including the motor 522) can be adjacent the piston assembly 510 inside the upper tube 204. For example, FIG. 24 is a cross-sectional view of the seat post 112 in which a motor assembly 2420 is coupled to or incorporated into the piston assembly 510. Therefore, the motor assembly 2420 is disposed inside the upper tube 204 around the overlap region of the upper and lower tubes 202, 204. FIG. 25 is an enlarged view of the callout 2400 of FIG. 24 showing the lower end 210 of the lower tube 202. In this example, a cap 2500 is coupled to the body 1200. The cap 2500 may not be airtight so that the third chamber 526 in the lower tube 202 can be vented to the atmosphere. As shown in FIG. 25, the first and second wires 532, 534 extend around the bottom end of the shaft 508 and then into the shaft 508 and up to the motor assembly 2420 (FIG. 24).

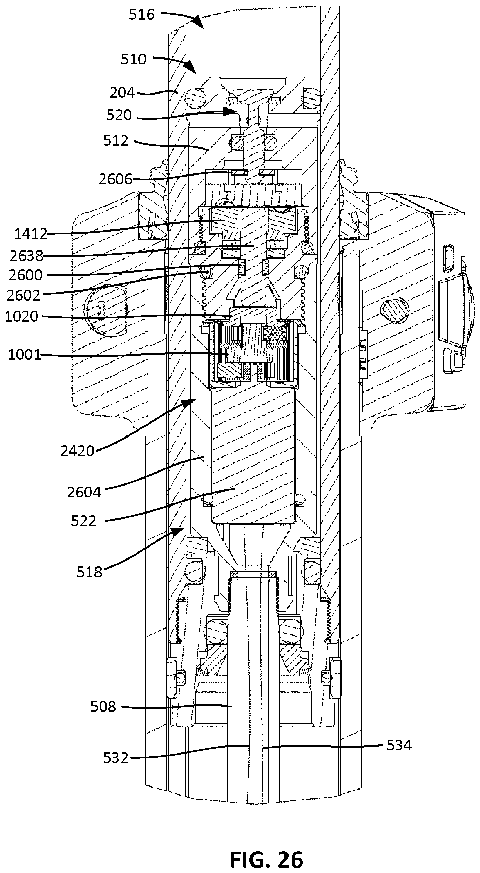

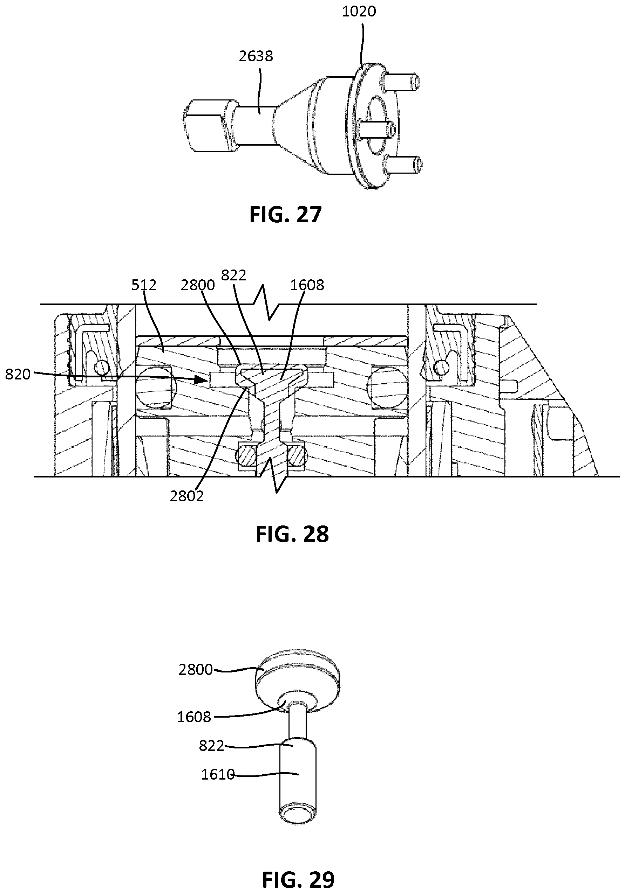

FIG. 26 is an enlarged view of the callout 2402 of FIG. 24 showing the piston assembly 510 and the motor assembly 2420 in the upper tube 204. The motor assembly 2420, including the motor 522, is coupled to the piston 512 and disposed in the upper tube 204. In particular, in this example, a motor housing 2604 is coupled (e.g., threadably coupled) to the top end of the shaft 508, and the piston 512 is coupled (e.g., threadably coupled) to a top of the motor housing 2604. As such, the piston 512 is above the motor assembly 2420 in the upper tube 204. The motor 522 and the gear reduction system 1001 are disposed in the motor housing 2604. The motor 522 and the gear reduction system 1001 are exposed to atmospheric pressure via the shaft 508. In the illustrated example, a valve rod 2638, which is similar to the valve rod 538 except the valve rod 2638 is relatively short, extends between the second carrier 1020 and the second cam 1412. In some examples, the valve rod 2638 and the second carrier 1020 are coupled (e.g., keyed together). However, in other examples, the valve rod 2638 and the second carrier 1020 constructed as a single unitary part (e.g., a monolithic structure). For example, FIG. 27 shows an example in which the valve rod 2638 and the second carrier 1020 are constructed as a single unitary part. In some instances, constructing the valve rod 2638 and the second carrier 1020 as a single unitary part helps to keep the valve rod 2638 concentric and helps to reduce or avoid frictional losses. A valve rod seal 2600 and a valve motor seal 2602 isolate the atmospheric pressure in the motor assembly 2420 from pressurized gas in the first chamber 516 (the positive chamber) and the second chamber 518 (the negative chamber). The first and second wires 532, 534 extend through the shaft 508 and into the motor housing 2604 and are electrically connected to the motor 522. In some examples, the piston assembly 510 includes a retainer 2606 (e.g., a circlip) coupled to the plug 822 to prevent the plug 822 from being ejected upward and removed from the piston 512. The rest of the parts of the valve 520 and the motor assembly 2420 are substantially the same as disclosed above and are not repeated herein.

In the examples disclosed above, the motor assemblies 220, 2420 are located in the atmospheric pressure region. However, in other examples, the motor assemblies 220, 2420 can be located in the positive or negative pressure regions (e.g., in the first or second chambers 516, 518). In some examples, the motor assemblies 220, 2420 and/or the wires 532, 534 may have a sealing surface such that they are partially in the positive or negative pressure regions on one side of a seal, and partially in an atmospheric pressure region on the other side of the seal. In some examples, the battery 404 and/or the control housing 402 can be installed in the positive or negative pressure regions. In some examples, instead of the motor 522, a solenoid can be used to control the valve 520.

In some examples, the valve seal 1406 (FIG. 14) may be co-molded with the plug 822. For example, FIG. 28 shows an example in which a layer of sealing material 2800 is molded around the first sealing portion 1608 (the poppet head) of the plug 822. This eliminates the need for a separate valve seal in the piston 512. For example, when the plug 822 is in the closed position, as shown in FIG. 28, the sealing material 2800 is sealingly engaged with a shoulder 2802 of the piston 512 in the central channel 820. This forms a sealing interface to block the flow of fluid through the central channel 820. In some examples, the sealing material 2800 is made of rubber and/or a polymer material, while the plug 822 is constructed of metal (e.g., stainless steel, aluminum). FIG. 29 is a perspective view of the plug 822 and the sealing material 2800. In this example, the sealing material 2800 covers the top, the sides, and the bottom (which forms the sealing surface) of the first sealing portion 1608. In some examples, the layer of sealing material 2800 is formed by dipping the first sealing portion 1608 of the plug 822 in liquid sealing material and then allowing the sealing material to cure and/or harden. In some examples, an adhesive layer is applied between the sealing material 2800 and the surface of the plug 822 to couple the sealing material 2800 to the plug. In some examples, the poppet seal 1404 may be similarly co-molded around the second sealing portion 1610 of the plug 822.

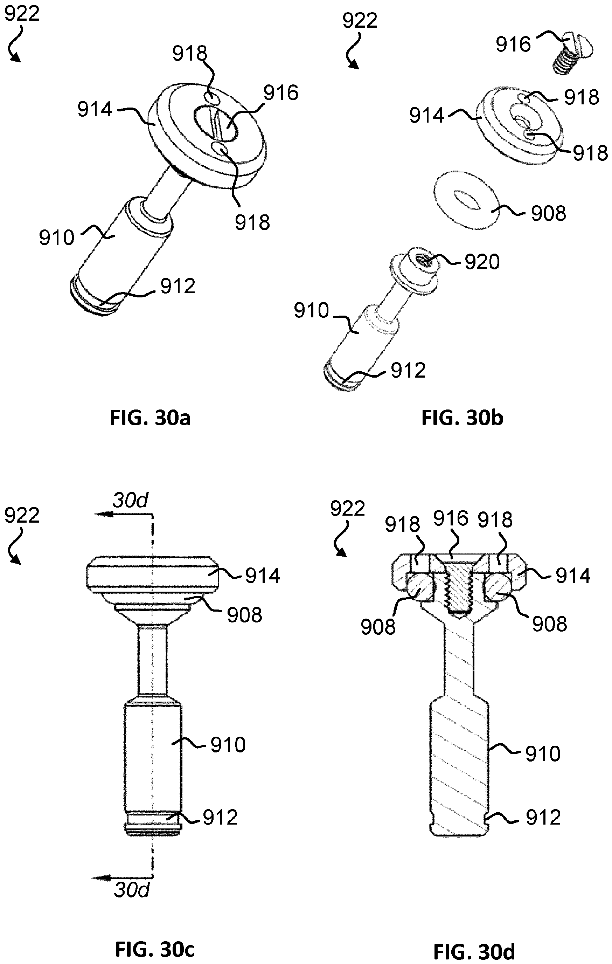

Turning now to FIGS. 30a, 30b, 30c, and 30d, another example of a plug 922 is provided. The plug 922 may generally be provided in a seat post as in other examples described herein. For example, the plug 922 may be implemented as shown in FIG. 8 referring to the plug 822. In various examples, the plug 922 is moveable in a linear direction between a closed position and an open position as described with reference to FIG. 8 above. As shown in FIG. 30a, the plug 922 includes a plug cap 914 attachable with a plug fastener 916. The plug fastener 916 as shown is a threaded fastener, but may be a rivet, press fit, or other type of fastener. As shown in FIG. 30b, the plug fastener 916 may at least in part retain a first sealing portion 908. The first sealing portion 908 as shown is an O-ring, but may be provided in any suitable configuration, for example as a face seal, a flange seal, a sealing plate, or another sealing arrangement. The first sealing portion 908 may be made from a rubber and/or a polymer material. The first sealing portion 908 may be removable as shown in FIG. 30b, for example to facilitate service or maintenance procedures.

The plug fastener 916 of FIG. 30b is shown in a disassembled state relative to a seal attachment portion 920. The seal attachment portion 920 may include a threaded attachment as shown in FIG. 30b. The first sealing portion 908 is sized and shaped such that a seal is formed between the first sealing portion 908 and the seal attachment portion 920 and between the first sealing portion 908 and the plug cap 914. The first sealing portion 908 may be positively located and/or preloaded between the plug cap 914 and the seal attachment portion 920. As shown in FIG. 30d, one or more of a plug vent 918 may be provided. As described above, a seal is generally formed between the first sealing portion 908 and each of the plug cap 914 and the seal attachment portion 920. However, it may be possible for high pressure fluid to bypass the first sealing portion 908 and enter, for example, the constrained space between the first sealing portion 908 and the plug cap 914. In such a scenario, the plug vent 918 is operable to dissipate pressure so as to not interfere with the sealing properties or retention of the first sealing portion 908. As can be seen in FIGS. 30a and 30b, the plug vent 918 may include a plurality of discrete plug vents. It should also be appreciated that a single plug vent 918 may alternatively be provided.

As shown in FIG. 30c, the plug 922 further includes a second sealing portion 910, for example to seal against a center channel (see the center channel 810 as described with reference to FIG. 8). The plug 922 also may include a plug retention feature 912. For example, the plug retention feature 912 may interact with one or more corresponding features of a seat post assembly to retain the plug 922 throughout its travel. As shown in FIGS. 30a-30d, the plug retention feature 912 may be a recess, for example to retain a circlip, e-clip, retaining ring, or other retention device (not shown). The plug retention feature 912 may interact directly or indirectly (e.g. with a retaining ring) with other features as does the retainer 2606 described above with reference to FIG. 26.

While the example pistons assemblies, valves, cam assemblies, and motor assemblies disclosed herein are described in connection with seat posts having a pneumatic platform, the examples disclosed herein can also be used in connection with hydraulic platforms. For example, instead of having pneumatic chambers filled with pressurized gas, the chambers 516, 518 can be filled with a hydraulic fluid, such as oil. Therefore, the examples disclosed herein can be used in connection with valves for compressible or incompressible fluids. Also, while the examples disclosed herein utilize a battery in the control module as the power supply to activate the motor, in other examples, the motor can be activated from another power supply, such as an electric bicycle battery or from another battery attached to the bicycle. Also, while the example cam assemblies disclosed herein are used to change rotational movement to linear movement, the example cam assemblies can also be reconfigured to change linear movement from a linear actuator to rotational valve movement.

The example piston assemblies, valves, cam assemblies, and motor assemblies can also be used in other types of bicycle components. For example, any of the example piston assemblies, valves, cam assemblies, and motor assemblies can be used in suspension components (e.g., a shock absorber, a front fork). A suspension component often includes first and second tubes arranged in a telescopic arrangement. The example piston assemblies and valves disclosed herein can be used as a damper or a spring component to control the flow of fluid between two chambers in the tube(s).

Example systems, apparatus, and articles of manufacture for bicycles (and/or other vehicles) are disclosed herein. Examples and combinations of examples disclosed herein include the following:

Example 1 is a height adjustable seat post for a bicycle. The height adjustable seat post includes an upper tube and a lower tube configured in a telescopic arrangement. The lower tube is to be coupled to a frame of the bicycle, and the upper tube is to be coupled to a seat. The height adjustable seat post includes a piston in the upper tube. The piston divides the upper tube into a first chamber and a second chamber. The first and second chambers are filled with fluid. The piston defines a fluid passageway between the first chamber and the second chamber. The height adjustable seat post also includes a plug in the fluid passageway. The plug is moveable in a linear direction between an open position to enable fluid flow through the fluid passageway and a closed position to block fluid flow through the fluid passageway. The height adjustable seat post further includes a motor and a cam assembly to convert rotational motion of the motor to linear movement of the plug.

Example 2 includes the height adjustable seat post of Example 1, wherein the cam assembly is in the piston.

Example 3 includes the height adjustable seat post of Examples 1 or 2, wherein the cam assembly includes a first cam, a second cam, and a plurality of balls between the first cam and the second cam.

Example 4 includes the height adjustable seat post of Example 3, wherein the first and second cams are axially aligned with the plug.

Example 5 includes the height adjustable seat post of Examples 3 or 4, wherein, when the motor is activated, the second cam is rotated relative to the first cam.

Example 6 includes the height adjustable seat post of Example 5, wherein rotation of the second cam in a first direction causes the first cam to move toward the plug to move the plug to the open position, and wherein rotation of the second cam in a second direction enables the first cam to move away from the plug to enable the plug to move to the closed position.

Example 7 includes the height adjustable seat post of Example 6, wherein the second cam has a first side facing the first cam, the first side having recesses, the plurality of balls disposed in respective ones of the recesses.

Example 8 includes the height adjustable seat post of Example 7, wherein each of the recesses has a deep portion with a first depth and a shallow portion with a second depth that is less than the first depth.

Example 9 includes the height adjustable seat post of Example 8, wherein, when the second cam is rotated in the first direction, the plurality balls are rolled from the deep portions of the recesses to the shallow portions of the recesses to move the first cam in a linear direction away from the second cam, and, when the second cam is rotated in the second direction, the plurality of balls are rolled from the shallow portions of the recesses to the deep portions of the recesses to enable the first cam to move in a linear direction toward the second cam.

Example 10 includes the height adjustable seat post of Example 9, further including a spring to bias the first cam toward the second cam.

Example 11 includes the height adjustable seat post of any of Examples 1-10, wherein the motor is coupled to a lower end of the lower tube.

Example 12 includes the height adjustable seat post of any of Examples 1-10, wherein the motor is coupled to the piston and disposed in the upper tube.

Example 13 includes the height adjustable seat post of any of Examples 1-12, further including: a control module to activate the motor, the control module coupled to an outer surface of the lower tube; and wires extending through the lower tube between the control module and the motor.

Example 14 is a height adjustable seat post for a bicycle. The height adjustable seat post includes a first tube and a second tube configured in a telescopic arrangement. One of the first tube or the second tube is to be coupled to a frame of the bicycle, and the other of the first tube or the second tube is to be coupled to a seat. The height adjustable seat post includes a piston in the first tube. The piston divides the first tube into a first chamber and a second chamber. The first and second chambers are filled with fluid. The piston defines a fluid passageway between the first and second chambers. The height adjustable seat post also includes a plug in the fluid passageway of the piston. The plug is moveable between an open position and a closed position to control a flow of the fluid between the first and second chambers. The height adjustable seat post further includes a cam assembly in the piston. The cam assembly includes a first cam, a second cam, and a plurality of balls between the first and second cams. Rotation of the second cam causes the first cam to move in a linear direction to move the plug between the open position and the closed position.

Example 15 includes the height adjustable seat post of Example 14, wherein the plurality of balls includes three balls.

Example 16 includes the height adjustable seat post of Example 14, wherein the first and second cams are disc-shaped.

Example 17 includes the height adjustable seat post of any of Examples 14-16, wherein the first cam has an anti-rotation feature to prevent rotation of the first cam in the piston.

Example 18 includes the height adjustable seat post of any of Examples 14-17, further including a motor to rotate the second cam, and wherein the motor is axially aligned with the plug.

Example 19 includes the height adjustable seat post of any of Examples 14-18, further including a layer of sealing material molded around a portion of the plug.

Example 20 is a bicycle component including a first tube and a second tube configured in a telescopic arrangement, and a valve disposed in the first tube and dividing the first tube into a first chamber and a second chamber. The first and second chambers are filled with fluid. The valve is operable between a closed state in which the fluid is blocked from flowing across the valve between the first and second chambers and an open state to enable the fluid to flow across the valve between the first and second chambers. The bicycle component also includes a cam assembly including a first cam, a second cam, and a ball between the first cam and the second cam. At least one of the first cam or the second cam having a recess with a ramped profile. The ball is disposed in the recess, and rotation of the second cam causes the ball to move the first cam in a linear direction to open or close the valve.

Example 21 includes the bicycle component of Example 20, wherein the fluid is a compressible fluid.

Example 22 includes the bicycle component of Examples 20 or 21, wherein the valve has a valve body, and wherein the cam assembly is disposed in the valve body.

Example 23 includes the bicycle component of any of Examples 20-22, wherein the recess has a deep portion with a first depth, a shallow portion with a second depth that is less than the first depth, and a hump between the shallow portion and the deep portion, the hump having a third depth that is less than the first depth and the second depth.

The illustrations of the embodiments described herein are intended to provide a general understanding of the structure of the various embodiments. The illustrations are not intended to serve as a complete description of all of the elements and features of apparatus and systems that utilize the structures or methods described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

While this specification contains many specifics, these should not be construed as limitations on the scope of the invention or of what may be claimed, but rather as descriptions of features specific to particular embodiments of the invention. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Although specific embodiments have been illustrated and described herein, it should be appreciated that any subsequent arrangement designed to achieve the same or similar purpose may be substituted for the specific embodiments shown. This disclosure is intended to cover any and all subsequent adaptations or variations of various embodiments. Combinations of the above embodiments, and other embodiments not specifically described herein, are apparent to those of skill in the art upon reviewing the description.

The Abstract of the Disclosure is provided to comply with 37 C.F.R. §1.72(b) and is submitted with the understanding that it will not be used to interpret or limit the scope or meaning of the claims. In addition, in the foregoing Detailed Description, various features may be grouped together or described in a single embodiment for the purpose of streamlining the disclosure. This disclosure is not to be interpreted as reflecting an intention that the claimed embodiments require more features than are expressly recited in each claim. Rather, as the following claims reflect, inventive subject matter may be directed to less than all of the features of any of the disclosed embodiments. Thus, the following claims are incorporated into the Detailed Description, with each claim standing on its own as defining separately claimed subject matter.

It is intended that the foregoing detailed description be regarded as illustrative rather than limiting and that it is understood that the following claims including all equivalents are intended to define the scope of the invention. The claims should not be read as limited to the described order or elements unless stated to that effect. Therefore, all embodiments that come within the scope and spirit of the following claims and equivalents thereto are claimed as the invention.

## Claims

1. A height adjustable seat post for a bicycle, the height adjustable seat post comprising:
an upper tube and a lower tube configured in a telescopic arrangement, the lower tube to be coupled to a frame of the bicycle, the upper tube to be coupled to a seat;
a piston in the upper tube, the piston dividing the upper tube into a first chamber and a second chamber, the first and second chambers filled with fluid, the piston defining a fluid passageway between the first chamber and the second chamber;
a plug in the fluid passageway, the plug moveable in a linear direction between an open position to enable fluid flow through the fluid passageway and a closed position to block fluid flow through the fluid passageway;
a motor; and
a cam assembly to convert rotational motion of the motor to linear movement of the plug.

2. The height adjustable seat post of claim 1, wherein the cam assembly is in the piston.

3. The height adjustable seat post of claim 1 or 2, wherein the cam assembly includes a first cam, a second cam, and a plurality of balls between the first cam and the second cam, wherein as an optional feature the first and second cams are axially aligned with the plug.

4. The height adjustable seat post of claim 3, wherein, when the motor is activated, the second cam is rotated relative to the first cam.

5. The height adjustable seat post of claim 4, wherein rotation of the second cam in a first direction causes the first cam to move toward the plug to move the plug to the open position, and wherein rotation of the second cam in a second direction enables the first cam to move away from the plug to enable the plug to move to the closed position,
wherein as an optional feature the second cam has a first side facing the first cam, the first side having recesses, the plurality of balls disposed in respective ones of the recesses,
wherein as a further optional feature each of the recesses has a deep portion with a first depth and a shallow portion with a second depth that is less than the first depth.

6. The height adjustable seat post of claim 5, wherein, when the second cam is rotated in the first direction, the plurality of balls are rolled from the deep portions of the recesses to the shallow portions of the recesses to move the first cam in a linear direction away from the second cam, and, when the second cam is rotated in the second direction, the plurality of balls are rolled from the shallow portions of the recesses to the deep portions of the recesses to enable the first cam to move in a linear direction toward the second cam,
further including as an optional feature a spring to bias the first cam toward the second cam.

7. The height adjustable seat post of one of the preceding claims, wherein the motor is coupled to a lower end of the lower tube.

8. The height adjustable seat post of one of the preceding claims, wherein the motor is coupled to the piston and disposed in the upper tube.

9. The height adjustable seat post of one of the preceding claims , further including:
a control module to activate the motor, the control module coupled to an outer surface of the lower tube; and
wires extending through the lower tube between the control module and the motor.

10. A height adjustable seat post for a bicycle, the height adjustable seat post comprising:
a first tube and a second tube configured in a telescopic arrangement, one of the first tube or the second tube to be coupled to a frame of the bicycle, the other of the first tube or the second tube to be coupled to a seat;
a piston in the first tube, the piston dividing the first tube into a first chamber and a second chamber, the first and second chambers filled with fluid, the piston defining a fluid passageway between the first and second chambers;
a plug in the fluid passageway of the piston, the plug moveable between an open position and a closed position to control a flow of the fluid between the first and second chambers; and
a cam assembly in the piston, the cam assembly including:
a first cam;
a second cam; and
a plurality of balls between the first and second cams, wherein rotation of the second cam causes the first cam to move in a linear direction to move the plug between the open position and the closed position.

11. The height adjustable seat post of claim 10,
wherein the plurality of balls includes three balls,
and/or wherein the first and second cams are disc-shaped,
and/or wherein the first cam has an anti-rotation feature to prevent rotation of the first cam in the piston.

12. The height adjustable seat post of one of claims 10 or 11,
further including a motor to rotate the second cam, and wherein the motor is axially aligned with the plug,
and/or further including a layer of sealing material molded around a portion of the plug.

13. A bicycle component comprising:
a first tube and a second tube configured in a telescopic arrangement;
a valve disposed in the first tube and dividing the first tube into a first chamber and a second chamber, the first and second chambers filled with fluid, optionally a compressible fluid, the valve operable between a closed state in which the fluid is blocked from flowing across the valve between the first and second chambers and an open state to enable the fluid to flow across the valve between the first and second chambers; and
a cam assembly including:
a first cam;
a second cam; and
a ball between the first cam and the second cam, at least one of the first cam or the second cam having a recess with a ramped profile, the ball disposed in the recess, wherein rotation of the second cam causes the ball to move the first cam in a linear direction to open or close the valve.

14. The bicycle component of claim 13, wherein the valve has a valve body, and wherein the cam assembly is disposed in the valve body.

15. The bicycle component of claim 13 or 14, wherein the recess has a deep portion with a first depth, a shallow portion with a second depth that is less than the first depth, and a hump between the shallow portion and the deep portion, the hump having a third depth that is less than the first depth and the second depth.
